# FASCICULE DE BREVET EUROPEEN

(11) **EP 2 768 878 B1**
(45) Date de publication et mention de la délivrance du brevet: **13.09.2017**
(21) Numéro de dépôt: 12790604.8
(22) Date de dépôt: 18.10.2012
(51) Int. Cl.: C08G 18/28, C08G 18/64, C08G 18/76, C08G 18/78, C08G 18/79, C08G 18/80, C08L 95/00, C09D 195/00, C07C 271/06

(54) **COMPOSITION DE RESINE POLYURETHANE LIQUIDE, STABLE, PRETE A L'EMPLOI ET SES UTILISATIONS**
STABILE UND GEBRAUCHSFERTIGE FLÜSSIGE POLYURETHANHARZZUSAMMENSETZUNG UND VERWENDUNGEN DAVON
STABLE, READY-TO-USE LIQUID POLYURETHANE RESIN COMPOSITION AND USES THEREOF

(30) Priorité: 20.10.2011 FR 1159538; 20.10.2011 FR 1159493; 20.10.2011 FR 1159492; 20.10.2011 FR 1159496
(43) Date de publication de la demande: 27.08.2014
(73) Titulaire: SOPREMA, 67100 Strasbourg (FR)
(72) Inventeur: DUROT, Louis, F-75012 Paris (FR); BINDSCHEDLER, Pierre-Etienne, F-67210 Obernai (FR); FRANCOIS BARSEGHIAN, Virginie, F-75013 Paris (FR); PERRIN, Rémi, F-67530 Boersch (FR)
(74) Mandataire: Cabinet Plasseraud
(86) Numéro de dépôt international: PCT/FR2012/052383
(87) Numéro de publication internationale: WO 2013/057439

(56) Documents cités:
- EP-A1- 1 013 716
- EP-A1- 2 383 304
- AU-A- 2 032 488
- DE-C1- 3 700 100
- US-A1- 2010 105 829
- US-A1- 2010 152 381

## Description

### Domaine d'application

La présente invention concerne des compositions de résine polyuréthane comprenant éventuellement du bitume qui sont liquides, à teneur réduite en, voire dépourvues de, solvant, stables, prêtes-à-l'emploi ou monocomposantes, applicables à froid et polymérisables à l'air libre. Ces compositions sont destinées à réaliser des revêtements d'étanchéité liquides, des revêtements d'imperméabilisation de support, des revêtements de sol et des revêtements anticorrosion dans le domaine du bâtiment, des travaux publics et du génie civil. Les compositions de résine polyuréthane bitumineuses permettent d'obtenir des revêtements à bas coût qui présentent d'excellentes propriétés adhésives notamment sur support bitumineux et qui ne nécessitent pas de couche de primaire.

### Art antérieur

Dans les ouvrages de travaux publics ou de bâtiments, il est nécessaire de protéger les structures, généralement en béton, de toute infiltration d'eau. Pour cela, on applique sur les structures des revêtements d'étanchéité.

Ces revêtements d'étanchéité sont souvent réalisés, notamment pour les surfaces planes horizontales, au moyen de membranes ou feuilles bitumineuses fixées sur un support par fusion partielle de leur sous-face pour obtenir une adhérence intime et résistante. La fusion partielle est obtenue par utilisation de chalumeaux ou appareils de chauffage analogues. Cependant, l'utilisation de tels appareils notamment à proximité d'éléments inflammables peut présenter des risques de débuts d'incendie lors de l'application de la flamme ou, plus grave encore, des risques d'incendie postérieurs aux travaux, par réactivation de la combustion de matériaux à combustion lente ayant été en contact avec la flamme, tels que par exemple des matériaux d'isolation thermique, souvent cachés et recouverts par d'autres matériaux moins sensibles à la chaleur.

On connaît bien entendu également des feuilles d'étanchéité à sous-face auto-adhésive à froid, toutefois elles sont fastidieuses à mettre en place et/ou ne présentent pas une adhérence suffisamment importante pour fournir un contact intime surfacique et une fixation qui résiste dans le temps, surtout sur des surfaces rugueuses ou verticales. De plus leur mise en oeuvre sur des surfaces comportant des points singuliers s'avère compliquée, voire impossible. Ainsi les feuilles d'étanchéité à sous-face auto-adhésive à froid doivent être remplacées par des revêtements liquides dans les cas suivants :
- lorsque la surface contient des points singuliers,
- sur surface poreuse ou sur surface non fermées ou irrégulières,
- sur surface verticale à cause d'un phénomène de fluage,
- lorsqu'il fait trop froid car le pouvoir auto-collant des feuilles est réduit,
- lorsque la réglementation n'accepte pas l'emploi de feuilles.

Des compositions liquides ont été envisagées pour faciliter l'application de ces revêtements d'étanchéité. En particulier, il existe des dispersions acryliques en solution aqueuse, qui durcissent par départ d'eau. Néanmoins ces produits présentent l'inconvénient après application de durcir en surface en formant une couche très mince qui rend difficile l'évaporation de l'eau, ce qui provoque la formation de cloques. Ces produits ont un durcissement lent, surtout lorsqu'il fait froid, ils sont très sensibles à la pluie avant leur durcissement total et ils forment des cloques pendant l'été. De surcroît, ces produits résistent mal à une immersion prolongée dans l'eau, ils ne sont donc pas appropriés pour étanchéifier des surfaces planes horizontales. Enfin, leur résistance mécanique est insuffisante pour une utilisation sur des surfaces circulables.

Il existe également des produits d'étanchéité de type résine de polyuréthane tels que des compositions multi-composantes, notamment des compositions bi-composantes, ou des compositions monocomposantes avec solvant, ou des compositions monocomposantes sans solvant mais de type « hot-melt », c'est-à-dire non-liquides à température ambiante, mais il n'existe pas encore sur le marché de compositions monocomposantes liquides, sans solvant permettant d'obtenir des revêtements auto-protégés en extérieur.

L'intérêt d'avoir une composition liquide plus ou moins visqueuse, avec ou sans adjonction de bitume, est de pouvoir l'appliquer à la spatule, au rouleau ou à la brosse, notamment en des endroits où l'installation de feuilles est problématique.

De façon classique, une résine de polyuréthane prête-à-l'emploi applicable à froid comprend :
- un prépolymère qui est le produit de réaction entre un polyisocyanate et un polyol,
- un solvant ou une combinaison d'un solvant et d'un plastifiant généralement exogène,
- un catalyseur et/ou un durcisseur permettant la polymérisation,
- éventuellement un agent compatibilisant lorsque la composition contient du bitume.

L'agent compatibilisant est nécessairement présent lorsque la résine est une résine polyuréthane bitumineuse utilisant un prépolymère de polyuréthane classique.

Les compositions de résine polyuréthane de l'art antérieur comprennent de grandes quantités de solvant et/ou de plastifiants exogènes et inertes afin d'abaisser leur viscosité. L'utilisation de solvant génère des compositions présentant les inconvénients suivants :
- une odeur désagréable due aux composés organiques volatils,
- une toxicité donnant lieu à un étiquetage spécifique,
- des problèmes vis-à-vis des règlementations environnementales.

L'utilisation de plastifiants exogènes et inertes génère des revêtements présentant les inconvénients suivants :
- affaiblissement de la résistance mécanique,
- affaiblissement de l'adhérence,
- un vieillissement réduit dans le temps,
- une absorption d'eau accrue.

En effet, le plastifiant exogène écarte les chaînes de polymères, ce qui conduit à un revêtement final ayant des propriétés mécaniques et de vieillissement affaiblies. De plus, l'écartement des chaînes de polymères donnera un revêtement susceptible d'absorber de l'eau, ce qui se traduira par un gonflement du revêtement et à terme un manque d'adhérence du revêtement. Or, si l'on veut obtenir un revêtement étanche, ce dernier ne doit pas présenter de défauts d'adhérence ni d'absorption d'eau importante. De surcroît, l'utilisation de plastifiant exogène et inerte ne permet pas d'obtenir une adhésivité suffisante pour assurer un accrochage suffisamment intime, résistant et durable sur des supports différents tels que le bitume ou le ciment, notamment sur des supports rugueux ou verticaux, et même sur des supports horizontaux avec eau stagnante sans primaire. Il est ainsi souvent nécessaire, pour mettre en oeuvre ces produits liquides plus ou moins visqueux, de prévoir un primaire d'adhérence et/ou une couche de protection spécifique supplémentaire.

La société Bayer, dans son brevet EP 1 108 735 divulgue une composition de résine polyuréthane non-bitumineuse bicomposante sans solvant. L'état liquide de la composition est obtenu par l'utilisation d'un plastifiant qui ne comporte pas de fonction isocyanate NCO ni de fonction hydroxyle (-OH), c'est-à-dire qu'il est non-polymérisable. Cependant, du fait de l'utilisation massive de ce plastifiant exogène, le revêtement final a des propriétés mécaniques réduites et une sensibilité accrue aux UV et aux parasites fongiques, tels que des moisissures et des champignons.

Une application importante des revêtements polyuréthanes est en extérieur. Lorsque l'on désire un revêtement coloré sur une zone circulable, on utilise une composition de résine polyuréthane sans bitume, ou résine polyuréthane non bitumineuse, qui présente une résistance mécanique élevée.

En revanche, lorsque l'on souhaite réaliser un revêtement sur une zone non-circulable, notamment sur une toiture, on peut utiliser une composition de résine polyuréthane avec bitume, ou résine polyuréthane bitumineuse, qui présente une adhérence élevée sur support bitumineux ou sur support béton sans primaire. L'introduction de mélanges bitumineux permet de faire baisser le prix de la composition et d'améliorer l'adhérence sur un support bitumineux mais il est source de difficultés supplémentaires liées à la compatibilisation du bitume avec les résines polyuréthane polaires ou prépolymères polyuréthane polaires qui sont les plus couramment employés.

Actuellement, on ne trouve dans le commerce que des compositions de résine polyuréthane bitumineuses bicomposantes sans solvant ou alors des compositions de résine polyuréthane bitumineuses monocomposantes avec solvant qui intègrent des quantités importantes d'huiles aromatiques ou de plastifiants exogènes, tels que le diisopropylnaphtalène, le dioctyle phthalate (DOP), le diisononyl phthalate (DINP), le Mesamoll®, le triméthyl pentanediol diisobutyrate (TXIB) et le phthalate de butylbenzyl, et/ou de charge liquide ou de diluant liquide. Cependant, les revêtements obtenus avec de tels produits, ne sont pas applicables sur un support bitumineux. En effet, l'huile aromatique exsude, dilue le support et une couche liquide se forme entre le bitume de support et le bitume du revêtement d'étanchéité. Ainsi un tel revêtement n'est pas adapté à la réparation d'un revêtement bitumineux existant. De plus, les compositions de résine polyuréthane bitumineuses monocomposantes de l'art antérieur ne peuvent pas être utilisées à l'extérieur. En effet, après application, l'huile plastifiante s'évapore, générant, à relativement brève échéance, des micros-fissures dans le revêtement qui en affaiblissent les propriétés d'étanchéité. De telles résines polyuréthane bitumineuses utilisant une huile aromatique plastifiante comme agent compatibilisant, sont les produits usuels et courants du marché, qui ne peuvent pas être utilisés sans protection ou sur des supports bitumineux et qui ne s'emploient que sur des supports en béton ou en ciment avec protection.

Les produits décrits sous l'appellation "Tremco system" dans le brevet US 5 319 008 de la société Tremco, sont des produits qui, en plus des problèmes cités précédemment, présentent des viscosités comprises entre 40 000 et 75 000 centipoises. Il s'agit donc de produits qui doivent être chauffés avant application, communément appelés produits « hot-melt », car non liquides à température ambiante ou pas assez liquides à température ambiante pour être appliqués facilement. Ces produits ne sont donc pas viables commercialement.

La plupart des compositions de résine polyuréthane bitumineuses connues ne se présentent pas sous la forme d'une composition monocomposante ou prête à l'emploi, qui faciliterait grandement leur utilisation, en particulier sur chantier. En effet la plupart des compositions de résine polyuréthane bitumineuses autoprotégées de l'art antérieur sont des systèmes bi-composants, elles doivent être mélangées avec un durcisseur ou un autre agent réactif avant l'application sur une surface pour que la polymérisation ait lieu.

Dans la demande de brevet FR 2 787 801, la Demanderesse a décrit une composition de résine polyuréthane bitumineuse liquide, prête-à-l'emploi et stable. Cette composition est adaptée à l'étanchéification de surfaces extérieures auto-protégées. Cependant, pour être utilisable industriellement, cette composition doit contenir du solvant afin d'abaisser la viscosité de la composition et de faciliter son application sur les ouvrages à étanchéifier. Or les solvants sont indésirables, coutent chers et pour des raisons écologiques et de santé publique, leur utilisation est progressivement réduite et sera selon toute vraisemblance interdite dans quelques années.

La société Teroson, dans son brevet US 4 871 792, divulgue une composition de résine polyuréthane bitumineuse prête-à-l'emploi sans solvant. La compatibilisation entre le bitume et le prépolymère est réalisée par l'utilisation de deux plastifiants : une résine butyluréthane-formaldéhyde-carbamate et le 2,3-dibenzyltoluène. L'inconvénient de cette composition est qu'elle génère du formaldéhyde toxique, ce qui impose un étiquetage de toxicité particulier qui dissuade le consommateur. De plus, la composition a une consistance pâteuse plutôt que liquide ce qui lui confère une utilisation en tant que mastic et non comme un revêtement d'étanchéité liquide applicable à froid. Le mastic, étant très épais, n'a pas besoin d'avoir une aussi bonne résistance au vieillissement car seule une faible surface est exposée. Une telle composition, appliquée en tant que revêtement ayant une épaisseur de 1 à 3 millimètres, n'aurait pas une tenue suffisante en milieu extérieur et ne serait pas applicable à froid.

La société Tremco dans sa demande de brevet GB 2 242 435 divulgue une composition de résine polyuréthane bitumineuse sans solvant. L'état semi-liquide de la composition est dû à l'utilisation d'une molécule de type tensioactif ayant une tête semi-polaire et une chaîne aliphatique. Ce tensioactif utilisé à la dose de 1 à 1,5% par rapport au poids de la composition est un bon agent compatibilisant qui disperse le bitume dans le prépolymère mais il est en trop faible proportion pour abaisser la viscosité de la composition. De plus, ce tensioactif n'est pas un plastifiant ; un plastifiant doit donc nécessairement être ajouté en plus dans la composition. Puisque la composition décrite ne contient pas de solvant, le plastifiant exogène, étant non-polymérisable, ne peut pas rester dans le revêtement final et l'on observe après application un phénomène d'exsudation important. De plus la composition du brevet GB 2 242 435 ne propose pas de solution pour éliminer le problème de bullage inhérent aux résines de polyuréthanes. En effet lors de la polymérisation à l'air libre, les fonctions isocyanates réagissent avec l'humidité de l'air pour former des liaisons uréthanes en libérant du dioxyde de carbone. Le gaz libéré engendre la formation de mousse qui génère des défauts de surface sur le revêtement final.

Les présents inventeurs ont trouvé qu'il était possible de pallier à tous les inconvénients des compositions et produits de l'art antérieur tout en limitant, voir supprimant l'utilisation de solvant, en mettant en oeuvre:
- un plastifiant polymérisable qui ne reste pas dans la composition sous sa forme libre après son application tel que décrit dans la demande de n° PCT/FR2012/052369 déposée le 18 octobre 2012;
- éventuellement un polyisocyanate masqué tel que décrit dans la demande de brevet n° PCT/FR2012/052372 déposée le 18 octobre 2012;
- éventuellement un diluant réactif comprenant une bis-oxazolidine et éventuellement une mono-oxazolidine, un catalyseur et un polyisocyanate présentant un nombre de fonctions isocyanates strictement supérieur à 1 et inférieur ou égal à 3,1, de préférence supérieur à 1,5 et inférieur ou égal à 2,2, tel que décrit dans la demande de brevet n° PCT/FR2012/052376 déposée le 18 octobre 2011;
et leurs mélanges.

Ainsi, la présente invention porte sur des compositions de résine polyuréthane liquides, qui ne présentent pas de problème de moussage et de bullage lors de leur application, et sur leur utilisation pour réaliser des revêtements, notamment des revêtements d'étanchéité autoprotégés. De préférence, les compositions selon l'invention sont monocomposantes ou prêtes-à-l'emploi, stables et non toxiques.

Les revêtements obtenus présentent de bonnes résistances mécaniques, ils résistent aux UV, au vieillissement par oxydation, à l'eau et aux agressions chimiques et ne présentent pas de défauts de surface (bulles ou exsudation). De tels revêtements peuvent être circulables et sont particulièrement adaptés à une utilisation en milieu extérieur non-protégé comme revêtement d'étanchéité.

### Définitions

Dans la présente invention, par "composition liquide", on entend une composition ayant une viscosité comprise entre 1 000 et 40 000 centipoises, ladite viscosité étant mesurée à 23°C à l'aide d'un viscosimètre Brookfield (pour des viscosités inférieures à 10 000 centipoises, les mesures sont réalisées avec le module R5 à une vitesse de 30 tr/min et pour des viscosités supérieures à 10 000 centipoises, les mesures sont réalisées avec le module R6 à une vitesse de 20 tr/min). Une telle viscosité permet l'application de la composition notamment avec un rouleau communément appelé « rouleau à patte de lapin » ou une brosse pour former des couches de 0,5 à 2 mm d'épaisseur en une ou plusieurs applications.

Par "composition monocomposante ou composition prête-à-l'emploi" on entend une composition qui est destinée à être appliquée telle quelle par l'utilisateur final, c'est-à-dire par l'ouvrier qui va réaliser le revêtement d'étanchéité. Une telle composition prête-à-l'emploi est classiquement appelée dans la technique "monocomposante", par opposition aux compositions qui nécessitent l'ajout d'un catalyseur ou durcisseur ou autre agent réactif avant l'emploi ou qui doivent être mélangées pour une durée limitée (quelques heures) avant d'être appliquées.

Par "composition stable", on entend une composition qui peut-être stockée pendant un minimum de 4 mois sans observer de déphasage ou de prise en masse.

Par "composition non toxique", on entend une composition de résine polyuréthane ou composition de résine polyuréthane bitumineuse qui contient moins de 1% en poids de monomères libres de diisocyanate, d'après la directive 67/548/CEE (30ème ATP directive 2008/58/CE), la teneur en monomères libres de diisocyanate étant mesurée par chromatographie en phase gazeuse couplée à un spectromètre de masse (selon la norme EN ISO 17734-1 / 2006).

Par "revêtement circulable" on entend un revêtement qui présente une résistance mécanique suffisante pour permettre la circulation de personnes et de véhicules sur sa surface libre.

Par "revêtement ayant une bonne résistance mécanique", on entend un revêtement qui présente une résistance à la rupture supérieure ou égale à 2 MPa pour un revêtement non-circulable et une résistance à la rupture supérieure ou égale à 5 MPa pour un revêtement circulable (la résistance à la rupture est mesurée sur un appareil Instron selon la norme EN ISO 527-3). De façon classique, dans la pratique, pour un allongement supérieur ou égal à 100%, un revêtement non circulable présente une résistance à la rupture de 2 à 3 MPa et un revêtement circulable présente une résistance à la rupture de 5 à 8 MPa. Des valeurs supérieures pour un revêtement circulable sont évidemment acceptables.

Par "revêtement autoprotégé, résistant aux rayons UV, aux intempéries, aux agressions chimiques", on entend un revêtement qui présente un taux de dégradation des propriétés mécaniques inférieur à 50% après vieillissement pendant 2500 heures dans une enceinte de vieillissement accéléré par cycles alternant 6 heures d'exposition aux UVA et 6 heures de condensation d'eau à 60°C.

Par "prépolymère" on entend un produit de réaction d'un polyol ou d'un mélange de polyols ayant un nombre de fonctions OH compris entre 1,5 et 3 avec un polyisocyanate ou un mélange de polyisocyanates ayant un nombre de fonctions NCO compris entre 1,6 et 3, dans un ratio tel que le nombre de fonctions NCO du polyisocyanate ou du mélange de polyisocyanates par rapport au nombre de fonctions OH du polyol ou mélange de polyols soit de 1,5 à 2,5 environ. De manière classique, les polyols utilisés sont notamment de type polyéther tel que un polyéthylène glycol (PEG), un polypropylène glycol (PPG), un triol de glycérine polypropylèneglycol, ou un polytétrahydrofurane (PTHF) ou un polyol de type polyester, tel que notamment le Priplast® 3196 commercialisé par la société CRODA ou le Krasol® LBH-p 3000 commercialisé par la société CRAYVALLEY ou un polycaprolactone tel que le PCP 1000 commercialisé par la société SOLVAY.

Par "polyisocyanate" on entend un composé ayant plus d'une fonction isocyanate, le diisocyanate peut donc également être désigné dans la présente demande par polyisocyanate.

Par "TDI" on entend le toluène diisocyanate.

Par "MDI" on entend le diphénylméthane diisocyanate.

Par "HDI" on entend l'hexaméthylène diisocyanate.

Par "IPDI" on entend l'isophorone diisocyanate.

Par "nombre d'-OH de la molécule [A]" on entend le nombre de groupes OH présents sur la molécule [A].

Par "indice hydroxyle de [A]" on entend le nombre total de groupes hydroxyles réactifs sur [A], cette valeur pouvant être mesurée par dosage en retour avec la potasse. L'indice hydroxyle est exprimé en mg KOH/g ce qui correspond à la quantité de KOH en mg qui est nécessaire pour neutraliser 1 g de [A].

Par "solvant" on entend les solvants classiquement utilisés dans des compositions de résine polyuréthane, lesdits solvants étant inertes vis-à-vis des réactifs contenus dans la composition, liquides à température ambiante et présentant une température d'ébullition inférieure à 240°C.

Par "plastifiant exogène" on entend une molécule ou un oligomère ajouté aux compositions de résine polymérique, telle qu'une composition de résine polyuréthane, pour rendre le matériau résultant plus flexible, plus résistant, plus résilient et/ou plus facile à manipuler, ledit plastifiant exogène étant inerte c'est-à-dire qu'il ne comprend pas de fonctions réactives qui lui permettrait de réagir sur lui-même ou avec les prépolymères contenus dans la composition.

Par "mono-oxazolidine" on entend un produit cyclique à 5 chaînons qui comprend un seul azote et au moins un oxygène et qui s'ouvre en présence de l'humidité de l'air pour conduire à une seule fonction azote réactive.

Par alkyle on entend un radical hydrocarbyle ayant 1 à 10 atomes de carbone, répondant à la formule générale CₙH₂ₙ₊₁ où n est supérieur ou égal à 1. Les groupes alkyles peuvent être linéaires ou ramifiés et peuvent être substitués par les groupements indiqués dans la présente demande.

Par aryle on entend un groupe hydrocarbyle polyinsaturé, aromatique, ayant un seul cycle (c'est-à-dire phényle) ou plusieurs cycles accolés (par exemple naphtyle) ou plusieurs cycles reliés par une liaison covalente (par exemple biphényle), qui contiennent typiquement 5 à 12 atomes de carbone, préférentiellement 6 à 10, et où au moins un cycle est aromatique. Le cycle aromatique peut optionnellement comprendre un à deux cycles supplémentaires (soit cycloalkyle, hétérocycloalkyle ou hétéroaryle) accolés. Le terme aryle comprend également les dérivés partiellement hydrogénés de systèmes carbocycliques décrits ci-dessus.

Lorsque les suffixes « ène » ou « diyl » sont employés en conjonction avec un groupement alkyle, cela veut dire que le groupe alkyle défini ci-dessus, présente deux liaisons simples comme point d'attache à d'autres groupes.

Par arylalkyle ou hétéroarylalkyle on entend un substituant alkyle linéaire ou ramifié ayant un atome de carbone attaché à un cycle aryle ou hétéroaryle.

Par hétéroaryle on entend un cycle ou deux cycles accolés ou reliés par une liaison covalente, comprenant 5 à 12 atomes de carbone, préférentiellement 6 à 10 atomes de carbone, où au moins l'un des cycles est aromatique et où au moins un ou plusieurs atomes de carbone sont remplacés par de l'oxygène, de l'azote et/ou du soufre. Le terme hétéroaryle comprend également des systèmes décrits ci-dessus ayant un groupe aryle, cycloalkyle, hétéroaryle ou hétérocycloalkyle accolé.

Par cycloalkyle on entend un hydrocarbyle monovalent, cyclique, insaturé ou saturé, présentant un ou 2 cycles et comportant 3 à 10 atomes de carbone.

Par hétérocycloalkyle on entend un cycloalkyle dans lequel au moins un atome de carbone est remplacé par un atome d'oxygène, d'azote et/ou de soufre.

Par arylcycloalkyle ou hétéroarylcycloalkyle on entend un cycloalkyle accolé ou lié par une liaison covalente à un cycle aryle ou hétéroaryle.

Par arylhétérocycloalkyle ou hétéroarylhétérocycloalkyle on entend un hétérocycloalkyle accolé ou lié par une liaison covalente à un cycle aryle ou hétéroaryle.

Par hydrocarbyle mono- ou polyinsaturé, on entend une chaîne hydrocarbonée ayant 2 à 30 atomes de carbones pouvant comporter au moins une insaturation.

Les groupes alkyle, aryle, arylalkyle, arylcycloalkyle, arylhétérocycloalkyle, hétéroaryl, hétéroarylalkyle, hydrocarbyle avec au moins une insaturation, chaîne hydrocarbonée mono ou polyinsaturée, peuvent en outre comporter un ou plusieurs substituants classiques choisis parmi : halogène, alkyle, cycloalkyle, hétérocycloalkyle, aryle, hétéroaryle, alcoxy, halogénoalkyle, arylalkyle, hétéroarylalkyle, arylhétérocycloalkyle.

### Composition de résine polyuréthane

Un premier objet de l'invention est une composition de résine polyuréthane comprenant un prépolymère et un plastifiant polymérisable constitué d'une chaîne hydrocarbonée dont une seule extrémité porte plus d'une fonction isocyanate, ladite chaîne hydrocarbonée comprenant et/ou étant substituée par un cycle aromatique et/ou un cycle aliphatique et/ou ladite chaîne hydrocarbonée est substituée par au moins deux chaînes hydrocarbonées pouvant comporter une insaturation, et le nombre de fonctions isocyanates étant strictement supérieur à 1, de préférence supérieur à 1,2, plus préférentiellement supérieur à 1,5 et inférieur ou égal à 2,2. Les prépolymères entrant dans la composition selon l'invention sont des produits commerciaux mais ils peuvent également être synthétisés avant de réaliser la composition de résine polyuréthane. De manière classique les prépolymères sont formés par réaction entre :
- un polyol ayant entre 1,5 et 3 fonctions OH et un poids moléculaire compris entre 900 et 3 000 g/mol, de préférence entre 1 000 et 2 800 g/mol et plus préférentiellement entre 1 500 et 2 500 g/mol ; et
- un di- et/ou polyisocyanate ayant entre 1,6 et 3 fonctions NCO ;
dans un ratio tel que le nombre de fonctions NCO du polyisocyanate par rapport au nombre de fonctions OH du polyol soit de 1,5 à 2,5 environ.
Le polyol utilisé pour former le prépolymère peut notamment être un polyol de type polyéther, polyester, polybutadiène, polycarbonate et leurs mélanges.

Le polyol de type polyéther peut notamment être un polypropylène glycol, un polyéthylène glycol, un triol de glycérine polypropylène glycol, un triol de glycérine polyéthylène glycol, ou un polytétrahydrofurane.

Le polyol de type polyester peut notamment être un polycaprolactone, un polyester d'acides gras dimères comprenant 34 à 36 atomes de carbone, un polyester polyadipate ou un polyester polyphthalate.

Le polyol polycarbonate peut notamment être un polycarbonate d'hexane-1,6-diol.

De préférence, le polyol ayant entre 1,5 et 3 fonctions OH et un poids moléculaire entre 900 et 3 000 g/mol entrant dans la formation du prépolymère est un polytétrahydrofurane, un polycarbonate d'hexane-1,6-diol, un polyester d'acides gras dimères comprenant 34 à 36 atomes de carbone, un polycaprolactone ou un polybutadiène hydroxylé.

Le di- et/ou polyisocyanate utilisé pour former le prépolymère peut notamment être le MDI, le MDI polymérique le TDI, un trimère de TDI, le HDI, une trimère de HDI, l'IPDI, un trimère d'IPDI, et leurs mélanges.

De préférence, le di- et/ou polyisocyanate entrant dans la formation du prépolymère est le MDI, le MDI polymérique le TDI, un trimère de TDI, et leurs mélanges.

La composition selon l'invention peut comprendre en outre au moins un constituant choisi dans le groupe comprenant :
- un polyisocyanate masqué, qui présente la formule suivante: 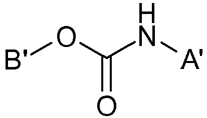 où
   - B' représente alkyle,
   - A' représente un groupe comportant un nombre de fonctions isocyanates compris entre 1,5 et 2,2, de préférence entre 1,5 et 2,1 et plus préférentiellement encore entre 1,5 et 2 ;
   et leurs mélanges.
- un produit diluant comprenant:
   - un polyisocyanate ou un mélange de polyisocyanates présentant un nombre de fonctions isocyanates strictement supérieur à 1 et inférieur ou égal à 3,1, de préférence supérieur à 1,5 et inférieur ou égal à 2,2,
   - une bis-oxazolidine et éventuellement une mono-oxazolidine, et
   - un catalyseur,
   les quantités de bis-oxazolidine, et éventuellement de mono-oxazolidine, et de polyisocyanate ou du mélange de polyisocyanates présentant un nombre de fonctions isocyanates strictement supérieur à 1 et inférieur ou égal à 3,1 étant telles que le ratio molaire entre les fonctions -NH de la bis-oxazolidine, et éventuellement de la mono-oxazolidine, et les fonctions NCO est de 0,3 à 0,75; les fonctions -NH de la bis-oxazolidine, et éventuellement de la mono-oxazolidine, étant les fonctions -NH issues des fonctions amines formées après ouverture du cycle oxazolidine;

Le nombre de fonctions isocyanates est estimé par calcul après titrage NCO par dosage en retour de l'excès de dibutylamine par de l'acide chlorhydrique (selon la norme EN ISO 14896-2006).

Selon un mode de réalisation particulier, la composition de résine polyuréthane selon l'invention comprend du bitume d'origine naturelle ou synthétique ou un mélange bitumineux liquide comprenant éventuellement une huile plastifiante aussi appelé « cut-back ».

Selon un mode de réalisation préféré, la composition de résine polyuréthane selon l'invention comprend un prépolymère, le plastifiant polymérisable, le polyisocyanate masqué, le produit diluant, et optionnellement du bitume ou un mélange bitumineux liquide.

Selon un autre mode de réalisation préféré, la composition selon l'invention ne comprend pas de polyisocyanate masqué mais au moins une partie du prépolymère de la composition est un prépolymère masqué qui est le produit de réaction entre ledit polyisocyanate masqué et un polyol ayant entre 1,5 et 3 fonctions OH et un poids moléculaire entre 900 et 3 000 g/mol, de préférence entre 1 000 et 2 800 g/mol et plus préférentiellement entre 1 500 et 2 500 g/mol, dans un ratio tel que le nombre de fonctions NCO du polyisocyanate par rapport au nombre de fonctions OH du polyol soit de 1,5 à 2,5 environ.

Selon un autre mode de réalisation préféré, la composition selon l'invention comprend à la fois le polyisocyanate masqué et le prépolymère masqué tels que définis ci-dessus.

Selon un mode de réalisation avantageux, les compositions selon l'invention sont liquides et présentent une teneur en solvant inférieure à 10%, de préférence inférieure à 5%, plus préférentiellement encore inférieure à 2%. Selon un mode de réalisation encore plus préféré, les compositions selon l'invention sont liquides alors qu'elles ne contiennent pas de solvant. Lesdites compositions sont dites liquides car leur viscosité est comprise entre 1 000 et 40 000 centipoises, lesdites viscosités étant mesurées à 25°C à l'aide d'un viscosimètre Brookfield DV-E, mobile 6, vitesse 20 tr/min.

Lorsque les compositions de résine polyuréthane ne comprennent pas de bitume, leur viscosité est préférentiellement comprise entre 1 000 et 20 000 centipoises.

Lorsque les compositions de résine polyuréthane comprennent du bitume, leur viscosité est préférentiellement comprise entre 15 000 et 40 000 centipoises.

Selon un autre mode de réalisation avantageux, les compositions selon l'invention présentent une teneur en plastifiant exogène inférieure à 10%, de préférence inférieure à 5%, plus préférentiellement encore inférieure à 2%. Selon un mode de réalisation encore plus préféré, les compositions selon l'invention sont totalement dépourvues de plastifiant exogène.

Selon un autre mode de réalisation avantageux, les compositions selon l'invention sont monocomposantes ou prêtes-à-l'emploi, c'est-à-dire qu'elles peuvent être appliquées directement sur la surface à étanchéifier, sans mélange avec un autre constituant et qu'elles polymérisent seules à l'air libre.

Selon un autre mode de réalisation avantageux, les compositions selon l'invention sont stables et peuvent être stockées pendant un minimum de 4 mois sans observer de déphasage ou de prise en masse. Cette stabilité provient d'une bonne compatibilisation des différents constituants des compositions grâce au plastifiant polymérisable, au produit diluant et/ou au polyisocyanate masqué.

Selon un autre mode de réalisation avantageux, les compositions selon l'invention présentent une faible toxicité puisqu'elles comprennent moins de 5%, de préférence moins de 4%, plus préférentiellement moins de 3%, plus préférentiellement encore moins de 2% et de manière encore plus préférentielle moins de 1% en poids de monomères libres de diisocyanate. Lorsque les compositions selon l'invention contiennent moins de 1% en poids de monomères libres de diisocyanate, tel que exigé par la classification et l'étiquetage du MDI selon la directive 67/548/CEE, le règlement CR N°790/2009 modifiant les classifications harmonisées de l'annexe VI, partie 3, du règlement N°1272/2008, ces compositions pourront être commercialisées sans étiquetage "toxique" ou « cancérogènes de catégorie 3 » ou « R40 : effet cancérigène suspecté-preuves insuffisantes ».

De préférence, la composition de résine polyuréthane selon l'invention n'est pas une composition de mousse de polyuréthane. De ce fait, selon un mode de réalisation particulier, la composition selon l'invention ne sera pas mélangée avec de l'eau pour polymériser et donner une mousse de polyuréthane. De la même façon la composition selon l'invention n'est pas destinée à être mélangée avec un agent de soufflage tel que notamment un gaz, par exemple le propane, butane, isobutane, dioxyde de carbone, monoxyde de carbone ou le diméthyléther pour former une mousse de polyuréthane.

### Plastifiant polymérisable

Le plastifiant polymérisable entrant dans la composition selon l'invention permet d'en abaisser la viscosité afin d'obtenir des compositions liquides facilement applicables par les utilisateurs à la spatule, au rouleau ou à la brosse. Ainsi, le plastifiant polymérisable permet de diminuer, voire de supprimer, l'utilisation de solvants dans des compositions de résines polyuréthane, de préférence des compositions de résines polyuréthane monocomposantes, ce qui limite, voire supprime les inconvénients liés à la présence de solvants. Outre les avantages liés à une faible teneur en solvant, la Demanderesse a constaté que les revêtements obtenus avec des compositions de résine polyuréthanes non-bitumineuses sans-solvant qui comprennent le plastifiant polymérisable adhèrent mieux à certaines supports que les revêtements obtenus avec des compositions avec solvant mais sans plastifiant polymérisable. Cette meilleure adhérence permet d'appliquer les compositions directement sur du béton, sans avoir besoin d'appliquer au préalable une couche de primaire d'adhérence.

De surcroit, le plastifiant polymérisable permet d'améliorer la compatibilité entre les charges bitumineuses et les prépolymères dans des compositions de résines polyuréthane bitumineuses, de préférence monocomposantes, ce qui permet de diminuer, voire de supprimer l'utilisation d'agents compatibilisants classiques tels que les plastifiants exogènes dans des compositions de résine polyuréthane bitumineuses.

Le remplacement des plastifiants exogènes par le plastifiant polymérisable dans des compositions de résine polyuréthane bitumineuses permet de supprimer le phénomène d'exsudation desdits plastifiants exogènes, ce qui permet d'appliquer les compositions bitumineuses directement sur du bitume, ce qui n'est pas possible lorsque la composition comporte une forte teneur en plastifiant exogène.

Le plastifiant polymérisable entrant dans la composition selon l'invention est constitué d'une chaîne hydrocarbonée dont une seule extrémité porte plus d'une fonction isocyanate, ladite chaîne hydrocarbonée comprenant et/ou étant substituée par un cycle aromatique et/ou un cycle aliphatique et/ou ladite chaîne hydrocarbonée est substituée par au moins deux chaînes hydrocarbonées pouvant comporter une insaturation, et le nombre de fonctions isocyanates étant strictement supérieur à 1, de préférence supérieur à 1,2, plus préférentiellement supérieur à 1,5 et inférieur ou égal à 2,2.

La chaîne hydrocarbonée du plastifiant polymérisable dont une seule extrémité porte plus d'une fonction isocyanate ne doit pas être une chaîne purement aliphatique non substituée afin que le plastifiant polymérisable selon l'invention présente un pouvoir diluant suffisant pour remplacer une partie ou la totalité du solvant d'une composition liquide de résine polyuréthane.

De préférence, les deux chaînes hydrocarbonées pouvant comporter une insaturation qui peuvent substituer la chaîne hydrocarbonée dont une seule extrémité porte plus d'une fonction isocyanate ne comprennent pas d'atomes d'oxygène, de préférence elles ne comprennent pas d'autres atomes que le carbone et l'hydrogène.

Le plastifiant polymérisable entrant dans la composition selon l'invention est décrit dans la demande de brevet n° PCT/FR2012/052369 déposée le 18 octobre 2012, qui est incorporée par référence.

Le plastifiant polymérisable utilisé dans la composition selon l'invention a un poids moléculaire compris entre 600 et 3 000 g/mol, de préférence entre 700 et 2 500 g/mol, et plus préférentiellement encore entre 800 et 2 000 g/mol.

Le plastifiant polymérisable utilisé dans la composition selon l'invention doit présenter une viscosité la plus faible possible, étant entendu qu'il doit entrer dans des compositions liquides ayant une teneur limitée en, voire dépourvues de, solvant. Une viscosité acceptable, est comprise entre 400 et 14 000 centipoises, de préférence entre 1 300 et 13 000 centipoises et plus préférentiellement encore entre 2 000 et 12 000 centipoises, mesurée avec un viscosimètre Brookfield (mobile 6, vitesse 20 tr/min, 25°C). Dans le cas d'un plastifiant préparé à base de polyisocyanate aliphatique, la viscosité sera de l'ordre de 5 000 à 14 000 centipoises alors que dans le cas d'un plastifiant préparé à base de polyisocyanate aromatique, la viscosité sera plus faible, de l'ordre de 400 à 4 000 centipoises. Le pouvoir diluant et la faible viscosité du plastifiant polymérisable sont dus à la présence d'une chaîne hydrocarbonée qui n'est pas une chaîne purement aliphatique non-substituée et à un nombre de fonctions isocyanates inférieur ou égal à 2,2 présentes à une seule extrémité. En effet, si le plastifiant polymérisable comprenait des fonctions isocyanates à plus d'une extrémité, la viscosité serait trop élevée pour qu'il puisse être utilisé comme diluant en remplacement de tout ou partie du solvant contenu dans une composition de résine polyuréthane liquide. En outre, ce produit est un bon agent comptabilisant des prépolymères avec des mélanges bitumineux utilisant des bitumes naturels ou de synthèse grâce à sa chaîne hydrocarbonée portant ou substituée par un cycle aromatique et/ou un cycle aliphatique et/ou à sa chaîne hydrocarbonée substituée par au moins deux chaînes hydrocarbonées pouvant comporter une insaturation.

Le plastifiant polymérisable utilisé dans la composition selon l'invention, polymérise avec les prépolymères contenus dans ladite composition. Contrairement à un plastifiant classique qui peut exsuder au vieillissement après application, le plastifiant polymérisable selon l'invention, n'exsudera pas car il ne se trouve plus à l'état libre dans le revêtement final. Les défauts liés à ce phénomène d'exsudation tels que la diminution de l'adhérence au support et des performances mécaniques, l'absorption d'eau, la mauvaise résistance au vieillissement, l'augmentation de la sensibilité aux UV et aux parasites fongiques, et l'apparition de bulles et de cloques sur le revêtement, seront donc évités par la mise en oeuvre du plastifiant polymérisable selon l'invention.

Selon un mode de réalisation particulier, le plastifiant polymérisable utilisé dans la composition selon l'invention présente la formule générale (I) suivante : 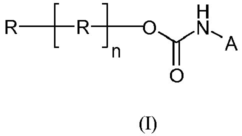 où chaque R représente indépendamment un motif qui ne comporte pas de fonction hydroxyle ni de fonction isocyanate et qui est choisi dans le groupe comprenant :
- alkyle,
- cycloalkyle,
- aryle,
- hétéroaryle,
- arylcycloalkyle,
- arylhétérocycloalkyle,
- hétéroarylalkyle,
- hétéroarylcycloalkyle,
- hydrocarbyle mono-ou polyinsaturée ;
et où n est compris entre 2 et 50, de préférence entre 3 et 30 et plus préférentiellement encore entre 5 et 25;
et où A est un groupe comportant un nombre de fonctions isocyanates strictement supérieur à 1, de préférence supérieur à 1,2, plus préférentiellement supérieur à 1,5 et inférieur ou égal à 2,2 ;
à la condition que la formule (I) comprenne soit au moins un cycle aromatique ou aliphatique dans au moins un motif R soit au moins deux motifs R alkyles substitués par une chaîne alkyle.

De préférence, le « groupe » de A est:
- une chaîne polymérique (provenant du MDI polymérique) répondant à la formule (A1) : 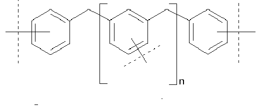 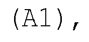
- un radical répondant à la formule (A2) ou à un radical apparenté d'un trimère de TDI : 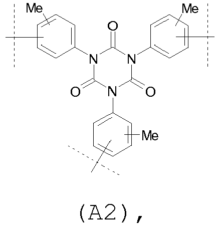
- un radical répondant à l'une des formules (A3) et/ou (A4) ou à un radical apparenté d'un trimère de HDI : 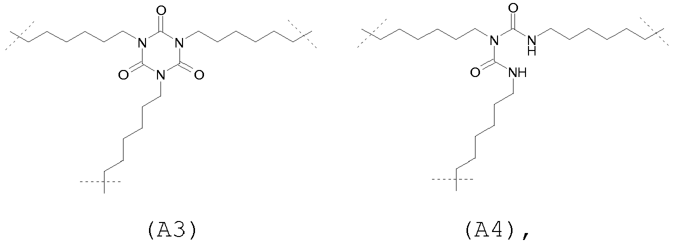
- un radical répondant à la formule (A5) ou à un radical apparenté d'un trimère d'IPDI : 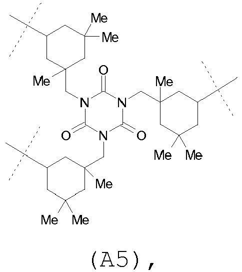 où chaque trait en pointillé représente un point d'attache à une fonction NCO ou au groupe -NHCOO-(R)ₙ-R de la formule (I) du plastifiant polymérisable et à la condition qu'il y ait au moins un trait en pointillé qui soit un point d'attache audit groupe -NHCOO-(R)ₙ-R et que les traits restants représentent un point d'attache à une fonction NCO.

Selon un mode de réalisation préférentiel, le plastifiant polymérisable utilisé dans la composition selon l'invention présente la formule générale (II) suivante : 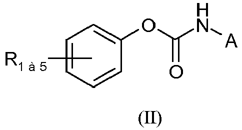 où les substituants R_{1 à 5} sont chacun indépendamment :
- halogène,
- alkyle,
- halogénoalkyle,
- cycloalkyle,
- aryle,
- alcoxy,
- arylalkyle,
- hétéroaryle,
- chaîne hydrocarbonée mono ou polyinsaturée;
et où R_{1 à 5} ne contiennent pas de fonction hydroxyle ni de fonction isocyanate ;
et où un au moins de R_{1 à 5} représente une chaîne polymère hydrocarbonée comprenant et/ou étant substituée par au moins un motif répétitif :
- alkyle,
- aryle,
- arylalkyle,
- arylcycloalkyle,
- arylhétérocycloalkyle,
- hétéroaryle,
- hétéroarylalkyle,
- hétéroarylcycloalkyle,
- hétéroarylhétérocycloalkyle,
- hydrocarbyle avec au moins une insaturation ;
et où A est un groupe comportant un nombre de fonctions isocyanates strictement supérieur à 1, de préférence supérieur à 1,2, plus préférentiellement supérieur à 1,5 et inférieur ou égal à 2,2.

Selon un mode de réalisation particulier, le plastifiant polymérisable utilisé dans la composition selon l'invention, présente la formule générale (II), où la chaîne polymère hydrocarbonée répond à la formule générale (IIIa) dans laquelle Z est un atome de carbone et/ou d'oxygène et n est compris entre 2 et 50, de préférence entre 3 et 30 et plus préférentiellement encore entre 5 et 25.

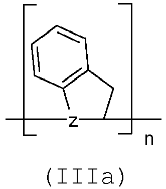

Selon un mode de réalisation particulier, le plastifiant polymérisable présente la formule générale (II), où la chaîne polymère hydrocarbonée répond à formule générale (IIIa) avec Z est un atome de carbone et/ou d'oxygène, où n est compris entre 2 et 50, de préférence entre 3 et 30 et plus préférentiellement encore entre 5 et 25, et où A est un radical répondant à la formule (A2) ou à un radical apparenté d'un trimère de TDI qui comporte un nombre de fonctions isocyanates strictement supérieur à 1 et inférieur ou égal à 2,2.

Selon un autre mode de réalisation, le plastifiant polymérisable présente la formule générale (II), où la chaîne polymère hydrocarbonée répond à formule générale (IIIa) avec Z est un atome de carbone et/ou d'oxygène, où n est compris entre 2 et 50, de préférence entre 3 et 30 et plus préférentiellement encore entre 5 et 25, et où A est un radical répondant à l'une des formules (A3) et/ou (A4) ou à un radical apparenté d'un trimère de HDI qui comporte un nombre de fonctions isocyanates strictement supérieur à 1 et inférieur ou égal à 2,2.

Selon un autre mode de réalisation, le plastifiant polymérisable présente la formule générale (II), où la chaîne polymère hydrocarbonée répond à formule générale (IIIa) avec Z est un atome de carbone et/ou d'oxygène, où n est compris entre 2 et 50, de préférence entre 3 et 30 et plus préférentiellement encore entre 5 et 25, et où A est un radical répondant à la formule (A5) ou à un radical apparenté d'un trimère d'IPDI qui comporte un nombre de fonctions isocyanates strictement supérieur à 1 et inférieur ou égal à 2,2.

Selon un mode de réalisation particulièrement préféré, le plastifiant polymérisable présente la formule générale (II), où la chaîne polymère hydrocarbonée répond à formule générale (IIIa) avec Z est un atome de carbone et/ou d'oxygène, où n est compris entre 2 et 50, de préférence entre 3 et 30 et plus préférentiellement encore entre 5 et 25, et où A est une chaîne polymérique (provenant du MDI polymérique) répondant à la formule (A1) qui comporte un nombre de fonctions isocyanates strictement supérieur à 1 et inférieur ou égal à 2,2.

Selon un mode de réalisation particulier, le plastifiant polymérisable présente la formule générale (II), où la chaîne polymère hydrocarbonée répond à la formule générale (IIIb) dans laquelle n est compris entre 2 et 50, de préférence entre 3 et 30 et plus préférentiellement encore entre 5 et 25.

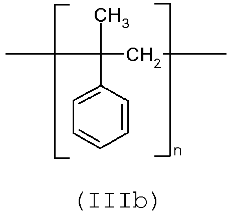

Selon un mode de réalisation particulier, le plastifiant polymérisable présente la formule générale (II), où la chaîne polymère hydrocarbonée répond à formule générale (IIIb), où n est compris entre 2 et 50, de préférence entre 3 et 30 et plus préférentiellement encore entre 5 et 25, et où A est un radical répondant à la formule (A2) ou à un radical apparenté d'un trimère de TDI qui comporte un nombre de fonctions isocyanates strictement supérieur à 1 et inférieur ou égal à 2,2.

Selon un autre mode de réalisation, le plastifiant polymérisable présente la formule générale (II), où la chaîne polymère hydrocarbonée répond à formule générale (IIIb), où n est compris entre 2 et 50, de préférence entre 3 et 30 et plus préférentiellement encore entre 5 et 25, et où A est un radical répondant à l'une des formules (A3) et/ou (A4) ou à un radical apparenté d'un trimère de HDI qui comporte un nombre de fonctions isocyanates strictement supérieur à 1 et inférieur ou égal à 2,2.

Selon un autre mode de réalisation, le plastifiant polymérisable présente la formule générale (II), où la chaîne polymère hydrocarbonée répond à formule générale (IIIb), où n est compris entre 2 et 50, de préférence entre 3 et 30 et plus préférentiellement encore entre 5 et 25, et où A est un radical répondant à la formule (A5) ou à un radical apparenté d'un trimère d'IPDI qui comporte un nombre de fonctions isocyanates strictement supérieur à 1 et inférieur ou égal à 2,2.

Selon un mode de réalisation particulièrement préféré, le plastifiant polymérisable présente la formule générale (II), où la chaîne polymère hydrocarbonée répond à formule générale (IIIb), où n est compris entre 2 et 50, de préférence entre 3 et 30 et plus préférentiellement encore entre 5 et 25, et où A est une chaîne polymérique (provenant du MDI polymérique) répondant à la formule (A1) qui comporte un nombre de fonctions isocyanates strictement supérieur à 1 et inférieur ou égal à 2,2.

Ledit plastifiant polymérisable utilisé dans la composition selon l'invention, est susceptible d'être obtenu par réaction entre:
- un composé de type alcool constitué d'une chaîne hydrocarbonée comprenant et/ou étant substituée par un cycle aromatique et/ou un cycle aliphatiques et/ou la chaîne hydrocarbonée du composé de type alcool est substituée par au moins deux chaînes hydrocarbonées pouvant comporter une insaturation et où ledit composé de type alcool présente un nombre d'-OH compris entre 0,8% et 2,5% , de préférence entre 1,3% et 2,4% et plus préférentiellement encore entre 1,4% et 1,7% en poids par rapport au poids dudit composé et ;
- un polyisocyanate comprenant 2,1 à 3,2 fonctions isocyanates, de préférence 2,5 à 3,1 fonctions isocyanates.

De manière générale, le composé de type alcool est une résine ayant une seule fonction alcool, c'est-à-dire une résine monohydroxylée, également appelée monoalcool, de préférence une résine monohydroxylée phénolique, également appelée monoalcool phénolique.

A titre d'exemple de résines monohydroxylées, on peut citer les résines terpéniques telles que α-pinène, β-pinène, dipentène, D-limonène et turpentine. A titre d'exemple de résines monohydroxylées phénoliques, on peut citer celles décrites dans Ullmanns Encyklopädie der technischen Chemie, 4ème édition, vol. 12, pages 539 à 545 (Verlag Chemie, Weinheim 1976) ; Kirk-Othmer, Encyclopedia of Chemical Technology, 3ème édition, vol. 12, pages 852 à 869 (John Wiley & Sons, New York, 1980) ; et Encyclopedia of Polymer Science and Engineering, vol. 7, pages 758 à 782 (John Wiley & Sons, New York, 1987).

Des exemples de monoalcools phénoliques préférés comprennent les résines d'alpha-méthylstyrène phénoliques et les résines de coumarone phénoliques.

Un exemple de composé de type alcool est un monoalcool phénolique de formule générale (IV) : 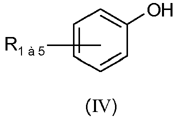 où R_{1 à 5} sont chacun indépendamment :
- halogène,
- alkyle,
- halogénoalkyle,
- cycloalkyle,
- aryle,
- alcoxy,
- arylalkyle,
- hétéroaryle,
- chaîne hydrocarbonée mono- ou polyinsaturée;
et où R_{1 à 5} ne contiennent pas de fonction hydroxyle ni de fonction isocyanate ;
et où un au moins de R_{1 à 5} représente une chaîne polymère hydrocarbonée comprenant et/ou étant substituée par au moins un motif répétitif :
- alkyle,
- aryle,
- arylalkyle,
- arylcycloalkyle,
- arylhétérocycloalkyle,
- hétéroaryle,
- hétéroarylalkyle,
- hétéroarylcycloalkyle,
- hétéroarylhétérocycloalkyle,
- hydrocarbyle avec au moins une insaturation.

Un autre exemple de monoalcool phénolique présente la formule générale (V) où chaque R représente indépendamment un arylhétérocycloalkyle et/ou un arylcycloalkyle comprenant 9 à 10 carbones et/ou un motif issu de la polymérisation de l'alpha-méthylstyrène.

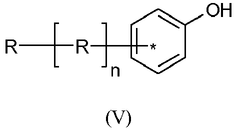

Un exemple particulier de résine phénolique est une résine selon la formule générale (V) où chaque R représente indépendamment benzofuranyle ou indényle.

Un exemple préféré de résine phénolique est une résine selon la formule générale (V) où chaque R représente un motif issu de la polymérisation de l'alpha-méthylstyrène.

Un exemple préféré de monoalcool phénolique est une résine de coumarone substituée par un phénol à une extrémité, telle que notamment la résine Novares® CA 100 ou la résine Novares® CA 120 commercialisées par la société RÜTGERS ou une résine alpha-méthylstyrène substituée par un phénol à une extrémité telle que notamment la résine Nevoxy® EPX-L5 commercialisée par la société NEVILLE, la résine Novares® LA 300 (CAS 68512-30-1) commercialisée par la société RÜTGERS ou la résine Epodil® L commercialisée par la société AIR PRODUCTS ou une résine hydrocarbonée aromatique phénolique telle que la résine Novares® LC 15 ou la résine Novares® LC 20 commercialisées par la société RÜTGERS.

Selon un mode de réalisation préférentiel, le monoalcool phénolique est la résine Novares® LA 300 (CAS 68512-30-1).

Le polyisocyanate peut notamment être un polyisocyanate aromatique, aliphatique ou cycloaliphatique.

Ledit polyisocyanate peut être choisi dans le groupe comprenant un trimère de TDI, un MDI polymérique, un trimère de HDI, un trimère d'IPDI et leurs mélanges.

Un exemple de polyisocyanate aromatique utilisable est un diphénylméthane diisocyanate (MDI) polymérique ayant 2,7 fonctions isocyanates, tel que notamment le Suprasec® 5025 commercialisé par la société HUNTSMAN.

Un exemple de polyisocyanate aliphatique utilisable est un trimère d'HDI ayant plus ou moins 3 fonctions isocyanates, tel que notamment le Desmodur® N3300 ou le Desmodur® N100 commercialisés par la société BAYER.

### Polyisocyanate masqué

Le polyisocyanate masqué pouvant entrer dans la composition selon l'invention permet d'amener le taux en monomères libres de diisocyanate dans la composition selon l'invention à un taux conforme et inférieur aux règlementations en vigueur.

Ce composé est également destiné à réagir avec un polyol afin de former un prépolymère masqué qui peut également être introduit dans une composition de résine polyuréthane selon l'invention, notamment dans une composition de résine polyuréthane monocomposante stable, afin d'amener le taux en monomères libres de diisocyanate à un taux conforme et inférieur aux règlementations en vigueur.

Le polyisocyanate masqué selon l'invention présente de plus l'avantage d'être moins réactifs que les polyisocyanates classiques, ce qui permet d'améliorer la stabilité des compositions au stockage.

De surcroît, le polyisocyanate masqué est un bon agent compatibilisant des charges hydrocarbonées et des prépolymères présents dans des compositions de résine polyuréthane non-bitumineuses et de résine polyuréthane bitumineuses, de préférence monocomposantes stables.

Le polyisocyanate masqué pouvant entrer dans la composition selon l'invention est un polyisocyanate dont une fonction a été masquée par un monoalcool, c'est-à-dire un adduit de polyisocyanate et de monoalcool, les deux composants étant reliés entre eux par une liaison uréthane.

Ce polyisocyanate masqué est un alkyl monouréthane de polyisocyanate ayant un nombre de fonctions isocyanates compris entre 1,5 et 2,2, de préférence entre 1,5 et 2,1 et plus préférentiellement encore entre 1,5 et 2.

Un tel polyisocyanate masqué est décrit dans la demande de brevet n° PCT/FR2012/052372 déposée le 18 octobre 2012, qui est incorporée par référence.

Le polyisocyanate masqué utilisé dans la composition selon l'invention présente la formule suivante : 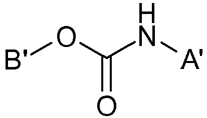 où :
- B' représente alkyle,
- A' représente un groupe comportant un nombre de fonctions isocyanates compris entre 1,5 et 2,2, de préférence entre 1,5 et 2,1 et plus préférentiellement encore entre 1,5 et 2.

De préférence B' est un alkyle, éventuellement insaturé, en C₂-C₂₀, de préférence en C₃-C₁₂, plus préférentiellement encore en C₄-C₁₀.

De préférence, le "groupe" de A' est:
- une chaîne polymérique (provenant du MDI polymérique) répondant à la formule (A'1) : 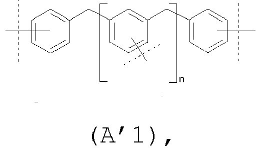
- un radical répondant à la formule (A'2) ou à un radical apparenté d'un trimère de TDI : 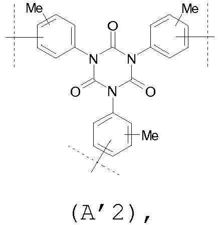
- un radical répondant à l'une des formules (A'3) et/ou (A'4) ou à un radical apparenté d'un trimère de HDI : 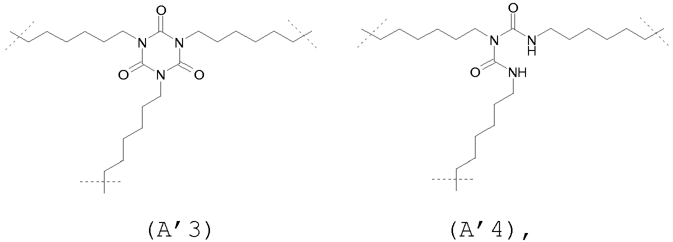
- un radical répondant à la formule (A'5) ou à un radical apparenté d'un trimère d'IPDI : 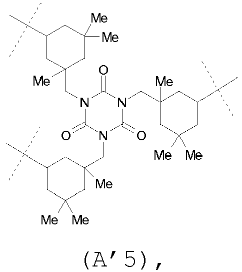
où chaque trait en pointillé représente un point d'attache à une fonction NCO ou au groupe -NHCOO-B' du polyisocyanate masqué et à la condition qu'il y ait au moins un trait en pointillé qui soit un point d'attache au groupe -NHCOO-B' et que les traits restants représentent un point d'attache à une fonction NCO.

Le polyisocyanate masqué utilisé dans la composition selon l'invention est susceptible d'être obtenu par un procédé qui comprend l'adjonction progressive d'un monoalcool de formule B'-OH sur un polyisocyanate de formule A'-NCO, A' et B' étant tels que définis ci-dessus.

Le monoalcool permettant le masquage peut notamment être un monoalcool aliphatique en C₂-C₂₀, de préférence en C₃-C₁₂ et plus préférentiellement encore en C₄-C₁₀.

Avantageusement, le monoalcool est choisi dans le groupe comprenant l'hexanol, le 2-éthylhexanol, le méthylhexanol, le butanol, les terpénols, et leurs mélanges.

Le polyisocyanate utilisé pour former le polyisocyanate masqué est aromatique, aliphatique ou cycloaliphatique et comprend entre 2,5 et 3,2 fonctions NCO. Il peut notamment être choisi dans le groupe comprenant un trimère de TDI, un MDI polymérique, un trimère d'HDI, un trimère d'IPDI, et leurs mélanges.

De préférence, le polyisocyanate utilisé pour former le polyisocyanate masqué est un MDI polymérique ayant entre 2,5 et 3,2 fonctions NCO ou un trimère de TDI.

Plus particulièrement, pour former le polyisocyanate masqué, on peut utiliser comme polyisocyanate aromatique un MDI polymérique ayant 2,7 fonctions isocyanates, tel que notamment le Suprasec® 5025 commercialisé par la société HUNTSMAN ou un MDI polymérique ayant 2,9 fonctions isocyanates, tel que notamment le Suprasec® 2085 commercialisé par la société HUNTSMAN.

Un exemple de polyisocyanate aliphatique utilisable pour former le polyisocyanate masqué est un trimère d'HDI ayant plus ou moins 3 fonctions isocyanates, tel que notamment le Desmodur® N3300 ou le Desmodur® N100 commercialisés par la société BAYER.

De façon à obtenir le nombre de fonctions isocyanates compris entre 1,5 et 2,2 sur le polyisocyanate masqué, on ajoute 0,60 mol à 1,50 mol, de préférence 0,80 mol à 1,3 mol, de monoalcool sur 1 mol de polyisocyanate. Si la teneur en monoalcool est trop faible, le nombre de fonctions isocyanates sera supérieur à 2,2 et les propriétés mécaniques, notamment l'élasticité, du revêtement obtenu à l'aide d'une composition contenant ce polyisocyanate masqué seraient altérées.

Le masquage du polyisocyanate se fait prioritairement sur la fonction isocyanate la plus réactive. De ce fait, la réactivité du polyisocyanate masqué est réduite ce qui permet aux compositions le contenant d'être plus stables dans le temps que des compositions contenant un polyisocyanate non masqué. De plus, l'utilisation du polyisocyanate masqué améliore la compatibilisation entre les prépolymères et les mélanges bitumineux utilisant des bitumes naturels ou synthétiques, notamment dans les compositions de résine polyuréthane monocomposantes stables.

La réaction entre le monoalcool et le polyisocyanate est une réaction exothermique. On contrôle donc l'adjonction progressive du monoalcool de façon à limiter l'élévation de température à une valeur inférieure à 60°C, de préférence inférieure à 50°C et plus préférentiellement encore inférieure à 40°C.

Lorsque la température redevient la température ambiante (environ 20°C), la réaction est terminée.

Ce procédé est respectueux de l'environnement, compte tenu du fait qu'il est conduit en l'absence de tout solvant et sans chauffage et qu'il ne génère pas de vapeurs toxiques.

Il est important de préciser que la composition selon l'invention comprend le polyisocyanate masqué en tant que tel, et non les réactifs permettant de former le polyisocyanate masqué. Ainsi, le polyisocyanate masqué doit être préalablement synthétisé avant son introduction dans la composition. En effet, si l'on met dans une composition de résine polyuréthane un monoalcool, un polyisocyanate ayant entre 2 et 3,2 fonctions NCO et un prépolymère, le prépolymère va réagir avec le monoalcool ce qui n'est pas souhaitable pour obtenir un revêtement élastique car la polymérisation sera stoppée en bout de chaîne puisque le monoalcool n'aura plus de fonction réactive une fois qu'il aura réagi avec le prépolymère. Les chaînes polymères résultantes seront donc plus courtes ce qui nuit à l'élasticité et à la résistance du revêtement final.

Il est également important de préciser que le masquage du polyisocyanate est un masquage partiel, c'est-à-dire qu'il reste des fonctions NCO libres pour réagir avec des fonctions OH et/ou NCO. Le masquage partiel du polyisocyanate se différencie du masquage total, où toutes les fonctions NCO du polyisocyanate sont masquées. En effet, le polyisocyanate masqué selon l'invention peut toujours polymériser avec un prépolymère alors qu'un polyisocyanate masqué totalement n'est pas libre de polymériser et il faut utiliser un moyen thermique ou chimique pour débloquer une partie des fonctions NCO avant que la composition puisse polymériser. Le masquage total des fonctions NCO d'un polyisocyanate suivi du démasquage par un moyen thermique ou chimique ne s'applique pas aux compositions que nous envisageons. Ainsi, dans les compositions selon l'invention, il n'y a pas besoin, par exemple, de chauffer la composition à haute température afin de libérer les fonctions NCO masquées ni d'ajouter un composé chimique qui permettrait le démasquage des fonctions NCO masquées pour initier la polymérisation.

### Prépolymère masqué

Le prépolymère masqué pouvant entrer dans la composition selon l'invention permet d'amener le taux en monomères libres de diisocyanate dans la composition à un taux conforme et inférieur aux règlementations en vigueur.

Le prépolymère masqué selon l'invention présente de plus l'avantage d'être moins réactif que les prépolymères classiques, ce qui permet d'améliorer la stabilité de composition au stockage.

Le prépolymère masqué pouvant entrer dans la composition selon l'invention est formé par réaction entre :
- un polyol ayant entre 1,5 et 3 fonctions OH et un poids moléculaire entre 900 et 3 000 g/mol, de préférence entre 1 000 et 2 800 g/mol et plus préférentiellement entre 1 500 et 2 500 g/mol ; et
- le polyisocyanate masqué tel que décrit précédemment ayant un nombre de fonctions isocyanates compris entre 1,5 et 2,2,
dans un ratio tel que le nombre de fonctions NCO du polyisocyanate par rapport au nombre de fonctions OH du polyol soit de 1,5 à 2,5 environ.

Le prépolymère masqué peut encore être formé par réaction entre ledit polyol et un mélange d'au moins un polyisocyanate et du polyisocyanate masqué tel que défini ci-dessus.

Ledit polyol ayant entre 1,5 et 3 fonctions OH et un poids moléculaire entre 900 et 3 000 g/mol entrant dans la formation du prépolymère masqué peut notamment être un polyol de type polyéther, polyester, polybutadiène, polycarbonate et leurs mélanges.

Le polyol de type polyéther peut notamment être un polypropylène glycol, un polyéthylène glycol, un triol de glycérine polypropylène glycol, un triol de glycérine polyéthylène glycol, ou un polytétrahydrofurane.

Le polyol de type polyester peut notamment être un polycaprolactone, un polyester d'acides gras dimères comprenant 34 à 36 atomes de carbone, un polyester polyadipate ou un polyester polyphthalate.

Le polyol polycarbonate peut notamment être un polycarbonate d'hexane-1,6-diol.

De préférence, le polyol ayant entre 1,5 et 3 fonctions OH et un poids moléculaire entre 900 et 3 000 g/mol entrant dans la formation du prépolymère masqué est un polytétrahydrofurane, un polycarbonate d'hexane-1,6-diol, un polyester d'acides gras dimères comprenant 34 à 36 atomes de carbone, un polycaprolactone ou un polybutadiène hydroxylé.

### Produit diluant

Le produit diluant pouvant entrer dans la composition selon l'invention permet d'améliorer la fluidité de la composition tout en permettant une bonne vitesse de durcissement. En effet, le produit diluant permet d'introduire dans la composition selon l'invention de fortes quantités de bis-oxazolidine.

Les bis-oxazolidines sont des agents durcisseurs particulièrement apprécié pour accélérer la polymérisation de la composition. En effet, les bis-oxazolidines aident à diminuer la formation de mousse qui est inhérente à la polymérisation latente à l'air libre des résines de polyuréthane. En effet, lors de la polymérisation sans ce type d'agent durcisseur, les fonctions isocyanates des prépolymères réagissent entre elles en présence de l'humidité de l'air pour former des liaisons urée en libérant du dioxyde de carbone. Le gaz libéré engendre la formation de mousse qui génère des défauts de surface sur le revêtement final. L'utilisation de bis-oxazolidine permet un autre mode de polymérisation qui ne génère pas de dioxyde de carbone. La bis-oxazolidine réagit avec l'humidité de l'air ce qui conduit à l'ouverture des deux cycles de la bis-oxazolidine. La bis-oxazolidine ouverte comporte des fonctions -OH et -NH qui peuvent réagir avec les fonctions isocyanates des prépolymères. Ainsi, le système polymérise par formation de liaisons uréthane et urée sans générer de dioxyde de carbone.

De plus, certaines bis-oxazolidines ont l'avantage supplémentaire d'être des produits diluants ce qui permettrait théoriquement d'abaisser la viscosité de la composition et d'améliorer la compatibilisation entre le prépolymère et le bitume. Cependant, cet effet diluant et compatibilisant ne peut pas être obtenu avec les quantités d'utilisation préconisées par les fabricants car elles sont trop faibles.

L'adjonction de bis-oxazolidine en quantités supérieures à celles préconisées engendre un revêtement présentant des instabilités et des risques de sous-polymérisation. En effet, la bis-oxazolidine utilisée ne doit être ni trop réactive ni trop peu réactive pour éviter que la composition ne polymérise lors du stockage. Si l'on met trop de bis-oxazolidine peu réactive, certains cycles de la bis-oxazolidine ne vont pas s'ouvrir assez rapidement pour réagir avec les fonctions isocyanates des prépolymères. Les cycles qui ne se sont pas ouverts lors de la polymérisation à l'air libre s'ouvriront une fois le revêtement formé, sous l'action de l'humidité de l'air, ce qui générera des fonctions -OH et -NH libres dans le revêtement final. Ce revêtement sera sensible à la reprise d'eau ce qui engendrera un gonflement et un décollement du revêtement et une sous-polymérisation.

Les présents inventeurs, ont trouvé qu'il était possible d'utiliser une quantité importante de bis-oxazolidine, éventuellement avec une mono-oxazolidine, pour abaisser la viscosité de la composition et éviter la formation de mousse lors de la polymérisation, sans détériorer les caractéristiques mécaniques du revêtement obtenu. Pour ce faire, ils ont trouvé qu'il fallait mettre en oeuvre, conjointement avec la bis-oxazolidine, une dose élevée de catalyseur et un polyisocyanate. Ce produit diluant permet une diminution des quantités de solvant dans la composition et améliore la compatibilisation, notamment avec les bitumes.

De plus, l'introduction du produit diluant dans une composition selon l'invention permet d'utiliser des prépolymères ayant une faible teneur en isocyanate, c'est-à-dire des prépolymères élastomères ayant une fonctionnalité NCO proche de 2 et donc d'avoir des compositions liquides qui donnent des revêtements élastomères. En effet, habituellement pour diluer une composition de résine polyuréthane avec de la bis-oxazolidine seule, il faut une composition ayant une forte teneur en isocyanate sinon la bis-oxazolidine ne polymérisera pas complètement ce qui engendrera des défauts dans le revêtement. Pour obtenir une forte teneur en isocyanate dans la composition, on peut notamment utiliser des prépolymères à forte teneur en isocyanate tels que des prépolymères ayant une fonctionnalité proche de 3. Cependant, les prépolymères trifonctionnels conduisent à des revêtements rigides et non élastomères ce qui n'est pas souhaitable pour réaliser des revêtements d'étanchéité.

Le produit diluant pouvant entrer dans la composition selon l'invention comprend:
- un polyisocyanate ou un mélange de polyisocyanates présentant un nombre de fonctions isocyanates strictement supérieur à 1 et inférieur ou égal à 3,1, de préférence supérieur à 1,5 et inférieur ou égal à 2,2,
- une bis-oxazolidine et éventuellement une mono-oxazolidine, et
- un catalyseur,
les quantités de bis-oxazolidine, et éventuellement de mono-oxazolidine, et de polyisocyanate ou du mélange de polyisocyanates présentant un nombre de fonctions isocyanates strictement supérieur à 1 et inférieur ou égal à 3,1 étant telles que le ratio molaire entre les fonctions -NH de la bis-oxazolidine, et éventuellement de la mono-oxazolidine, et les fonctions NCO est de 0,3 à 0,75; les fonctions -NH de la bis-oxazolidine, et éventuellement de la mono-oxazolidine, étant les fonctions -NH issues des fonctions amines formées après ouverture du cycle oxazolidine.

De préférence, ledit produit diluant ne comprend pas de solvant.

De préférence, ledit produit diluant ne comprend pas de plastifiant exogène.

De préférence, le produit diluant pouvant entrer dans la composition selon l'invention consiste en :
- un polyisocyanate ou un mélange de polyisocyanates présentant un nombre de fonctions isocyanates strictement supérieur à 1 et inférieur ou égal à 3,1, de préférence supérieur à 1,5 et inférieur ou égal à 2,2,
- une bis-oxazolidine et éventuellement une mono-oxazolidine, et
- un catalyseur,
les quantités de bis-oxazolidine, et éventuellement de mono-oxazolidine, et de polyisocyanate ou du mélange de polyisocyanates présentant un nombre de fonctions isocyanates strictement supérieur à 1 et inférieur ou égal à 3,1 étant telles que le ratio molaire entre les fonctions -NH de la bis-oxazolidine, et éventuellement de la mono-oxazolidine, et les fonctions NCO est de 0,3 à 0,75; les fonctions -NH de la bis-oxazolidine, et éventuellement de la mono-oxazolidine, étant les fonctions -NH issues des fonctions amines formées après ouverture du cycle oxazolidine.

Le ratio entre la bis-oxazolidine, et éventuellement la mono-oxazolidine, et le polyisocyanate est tel que le nombre de fonctions NCO du polyisocyanate est supérieur au nombre de fonctions -NH de la bis-oxazolidine, et éventuellement de la mono-oxazolidine (issues des fonctions amines libérées après ouverture du cycle de la bis-oxazolidine), pour que toutes les fonctions -NH réagissent avec les fonctions NCO du polyisocyanate.

La quantité de mono-oxazolidine dans le produit diluant est comprise entre 0 et 40% en poids, de préférence entre 5 et 25% en poids, par rapport au poids de la bis-oxazolidine.

La quantité de catalyseur dans le produit diluant est comprise entre 10 et 70%, de préférence entre 20 et 50% et plus préférentiellement entre 30 et 50% en poids, par rapport au poids de la bis-oxazolidine.

Ce produit diluant est décrit dans la demande de brevet n° PCT/FR2012/052376 déposée le 18 octobre 2012, qui est incorporée par référence.

Selon un mode de réalisation particulier, le produit diluant utilisé dans la composition selon l'invention comprend:
- une quantité de polyisocyanate ou d'un mélange de polyisocyanates présentant un nombre de fonctions isocyanates strictement supérieur à 1 et inférieur ou égale à 3,1, telle que le nombre de fonctions NCO soit équivalent à celui de 100 parties en poids de diisocyanate de diphénylméthane MDI (N°CAS 26447-40-5) ;
- 40 à 100 parties en poids de bis-oxazolidine et éventuellement de mono-oxazolidine; et
- 30 à 50 parties en poids de catalyseur.

La bis-oxazolidine mise en oeuvre dans le produit diluant utilisé dans la composition selon l'invention ne doit pas présenter une viscosité trop élevée afin de présenter des propriétés diluantes. On entend par propriétés diluantes l'aptitude d'un produit à dissoudre et/ou à abaisser la viscosité de la composition dans laquelle il est ajouté. Ainsi, selon un mode de réalisation particulier, ladite bis-oxazolidine présente une viscosité inférieure à 80 mPa.s à 20°C, de préférence de l'ordre de 50 mPa.s à 20°C, mesurée à l'aide d'un viscosimètre Brookfield (module 3, 20 tr/min).

La bis-oxazolidine est un dérivé de dioxazolane. De préférence, la bis-oxazolidine comprend un groupement carbonate entre les deux cycles oxazolidines et répond à la formule générale suivante : 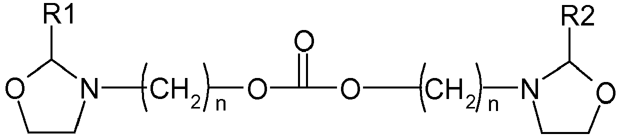 où n est un entier qui vaut 1, 2, 3 ou 4 ; et
où R1 et R2 sont indépendamment un hydrogène ou un alkyle linéaire ou ramifié comprenant 1 à 4 atomes de carbone.

Selon un mode de réalisation particulier, la bis-oxazolidine est celle commercialisée par la Société INCOREZ sous la marque Incozol® LV (n° CAS 145899-78-1) de formule générale suivante :

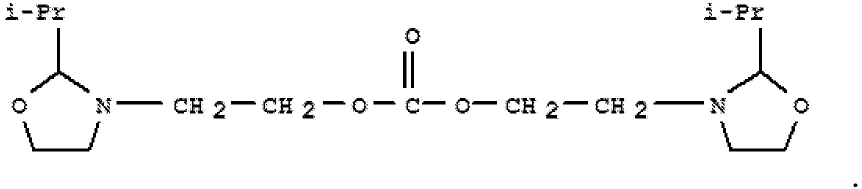

La mono-oxazolidine est une mono-oxazolidine dépourvue de groupes OH. Selon un mode de réalisation particulier, la mono-oxazolidine est celle commercialisée par la société ANGUS sous la marque Zoldine® ZE (n° CAS 7747-35-5) de formule générale suivante :

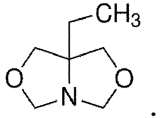

Le catalyseur mis en oeuvre dans le produit diluant est choisi dans le groupe comprenant les anhydrides d'acide organique, les acides gras à longue chaîne, les sels organométalliques, et leurs mélanges. De préférence, le catalyseur mis en oeuvre dans le produit diluant selon l'invention est un anhydride d'acide organique.

A titre d'exemples d'anhydrides d'acide organique, on peut citer l'anhydride méthyltétrahydrophtalique (MHTPA), l'anhydride méthylnadique (encore appelé anhydride endo-cis-bicyclo(2,2,1)-5-heptène-2,3 dicarboxylique - N° CAS 129-64-6) et l'anhydride méthylsuccinique.

A titre d'exemples d'acides gras à longues chaînes, on peut citer l'acide stéarique, l'acide palmitique et l'acide oléique.

A titre d'exemples de sels organométalliques, on peut citer les sels de métaux lourds d'acides gras tels que des sels de plomb, de baryum, d'étain ou de cadmium d'acides gras.

Selon un mode de réalisation particulier, on utilise la bis-oxazolidine commercialisée par la Société INCOREZ sous la marque Incozol® LV avec le MHTPA comme catalyseur.

En introduisant le produit diluant dans une composition de résine polyuréthane selon l'invention ne comprenant pas d'autre catalyseur, la quantité de catalyseur introduit dans la composition de résine polyuréthane résultante est deux à dix fois supérieures à celles utilisées classiquement dans l'industrie. En effet, habituellement la dose recommandée de catalyseur, notamment d'anhydride d'acide organique, dans une composition de résine polyuréthane est comprise entre 0,02 et 0,5% en poids par rapport au poids de la composition. Dans le cadre de l'invention la bis-oxazolidine, et éventuellement la mono-oxazolidine, est activée par l'ajout de catalyseur dans une quantité allant de 0,5 à 5%, de préférence de 0,5 à 3,5%, plus préférentiellement de 0,6 à 2,5%, et plus préférentiellement encore de 1 à 2,2% en poids par rapport au poids de la composition.

Le polyisocyanate présentant un nombre de fonctions isocyanates strictement supérieur à 1 et inférieur ou égal à 3, 1 mis en oeuvre dans le produit diluant est choisi dans le groupe comprenant un polyisocyanate aromatique, aliphatique, cycloaliphatique et leurs mélanges.

Ledit polyisocyanate peut être choisi dans le groupe des polyisocyanates classiques comprenant le 2,4-toluène diisocyanate (TDI), un trimère de TDI, le diphénylméthane diisocyanate (MDI), un MDI polymérique, l'hexaméthylène diisocyanate (HDI), un trimère d'HDI, l'isophorone diisocyanate (IPDI), un trimère d'IPDI et leurs mélanges.

Plus particulièrement, on peut utiliser un MDI modifié ayant 2 fonctions isocyanates, tel que notamment le Suprasec® 2385 commercialisé par la société HUNTSMAN.

Un exemple de polyisocyanate aliphatique utilisable est le HDI ayant 2 fonctions isocyanates, tel que notamment le Desmodur® N3400 commercialisé par la société BAYER.

Ledit polyisocyanate mis en oeuvre dans le produit diluant peut également être un prépolymère classique résultant de la réaction entre un polyol ou un mélange de polyols ayant un nombre de fonctions OH compris entre 1,5 e t 3 avec un polyisocyanate ou un mélange de polyisocyanates ayant un nombre de fonction NCO compris entre 1,6 et 3, dans un ratio moléculaire stoechiométrique de 1,5 à 2,5 environ de polyisocyanate ou du mélange de polyisocyanates par rapport au polyol ou mélange de polyols.

Ledit polyisocyanate mis en oeuvre dans le produit diluant peut également être un plastifiant polymérisable tel que décrit précédemment.

Selon un mode de réalisation particulier, ledit plastifiant polymérisable est le produit de réaction du MDI polymérique ayant 2,7 fonctions NCO avec une résine de coumarone phénolique ou une résine d'alpha-méthylstyrène phénolique.

Ledit polyisocyanate mis en oeuvre dans le produit diluant peut également être un polyisocyanate masqué par un monoalcool tel que décrit précédemment.

Ledit polyisocyanate mis en oeuvre dans le produit diluant peut également être un polyisocyanate masqué par un monoalcool tel que décrit précédemment.

Selon un mode de réalisation particulier, ledit polyisocyanate masqué par un monoalcool est le produit de réaction du MDI polymérique avec un monoalcool aliphatique en C₂-C₂₀, de préférence un monoalcool aliphatique en C₃-C₁₂, plus préférentiellement encore en C₄-C₁₀.

Le polyisocyanate mis en oeuvre dans le produit diluant peut être un mélange de polyisocyanate classique, de polyisocyanate masqué, de prépolymère classique, de prépolymère masqué et/ou de plastifiant polymérisable tels que décrits précédemment.

Le produit diluant selon l'invention doit préférentiellement être utilisé rapidement après sa préparation afin que le polyisocyanate ne réagisse pas avec la bis-oxazolidine. Le produit diluant selon l'invention est donc un intermédiaire de fabrication qui n'est pas stable après deux jours de stockage. Le produit diluant selon l'invention doit être conservé à l'abri de l'air et de l'humidité. En revanche, lorsque le produit diluant est ajouté dans une composition de résine polyuréthane, de préférence une composition de résine polyuréthane monocomposante, la composition résultante est stable et peut-être stockée pendant un minimum de 4 mois sans observer de déphasage ou de prise en masse. En effet, le produit diluant selon l'invention sera dilué dans la masse de la composition et le polyisocyanate ne réagira pas avec la bis-oxazolidine tant que la composition n'est pas exposée à l'humidité de l'air.

### Modes de réalisation particuliers de compositions de résine polyuréthane

Selon un mode de réalisation particulier, la composition polyuréthane selon l'invention comprend :
- 20 à 50%, de préférence de 15 à 45%, plus préférentiellement encore de 18 à 40% d'un prépolymère ;
- 20 à 50%, de préférence de 25 à 45%, plus préférentiellement encore de 30 à 40% de plastifiant polymérisable ;
- 2 à 25% de préférence de 5 à 20%, plus préférentiellement encore de 10 à 15% de produit diluant ;
- 0 à 50%, de préférence de 10 à 40%, plus préférentiellement encore de 20 à 30% de mélange bitumineux ;
- 0 à 10%, de préférence de 0 à 5%, plus préférentiellement encore de 0 à 2% de solvant ;
les pourcentages étant en poids par rapport au poids total de la composition.

Selon un mode de réalisation préféré la composition polyuréthane non-bitumineuse selon l'invention comprend :
- 30 à 50% de prépolymère ;
- 10 à 50%, de préférence 30 à 50% de plastifiant polymérisable, tel que celui issu de la réaction entre une résine de alpha-méthylstyrène phénolique, telle que la Novares® LA 300 (CAS 68512-30-1) et un polyisocyanate comprenant 2 à 3,1 fonctions isocyanates, tel que le Suprasec® 5025 (MDI polymérique ayant 2,7 fonctions NCO) ;
- 5 à 25%, de préférence 5 à 15% de produit diluant, tel que celui comprenant une bis-oxazolidine, telle que l'Incozol® LV, et éventuellement une mono-oxazolidine; un catalyseur, tel que l'anhydride méthyltétrahydrophtalique; et un polyisocyanate ou un mélange de polyisocyanates présentant un nombre de fonctions isocyanates strictement supérieur à 1 et inférieur ou égal à 2,2, tel que le MDI ou un MDI polymérique masqué par un monoalcool ;
les pourcentages étant en poids par rapport au poids total de la composition.

Dans ces compositions, au moins une partie du prépolymère peut-être un prépolymère masqué qui est le produit de réaction entre un polyol et le polyisocyanate masqué présentant un nombre de fonctions isocyanates compris entre 1,5 et 2,2 tel que décrit précédemment.

Cette composition est liquide, monocomposante ou prête à l'emploi, stable et dépourvue de solvant. Elle sera donc tout à fait appropriée pour une application directe, aisée en extérieur comme en intérieur.

Selon un autre mode de réalisation préféré la composition polyuréthane bitumineuse selon l'invention comprend :
- 15 à 50% de mélange bitumineux ou cut-back composé de bitume et d'huile plastifiante, telle que le Ruetasolv® Di ;
- 20 à 50% de prépolymère ;
- 10 à 40% de plastifiant polymérisable, tel que celui issu de la réaction entre une résine alpha-méthylstyrène phénolique, telle que la Novares® LA 300 (CAS 68512-30-1) et un polyisocyanate comprenant 2 à 3,1 fonctions isocyanates, tel que le Suprasec® 5025 (MDI polymérique ayant 2,7 fonctions NCO) ;
- 4 à 10% de produit diluant, tel que celui comprenant une bis-oxazolidine, telle que l'Incozol® LV, et éventuellement une mono-oxazolidine; un catalyseur, tel que l'anhydride méthyltétrahydrophtalique; et un polyisocyanate ou un mélange de polyisocyanates présentant un nombre de fonctions isocyanates strictement supérieur à 1 et inférieur ou égal à 2,2, tel que le MDI ou un MDI polymérique masqué par un monoalcool.

Dans cette composition, au moins une partie du prépolymère peut-être un prépolymère masqué qui est le produit de réaction entre un polyol et le polyisocyanate masqué présentant un nombre de fonctions isocyanates compris entre 1,5 et 2,2 tel que décrit précédemment.

Cette composition bitumineuse est liquide, monocomposante ou prête à l'emploi, stable et dépourvue de solvant. Elle sera donc tout à fait appropriée pour une application directe, aisée en extérieur comme en intérieur.

### Utilisation

L'invention porte également sur l'utilisation de la composition selon l'invention pour réaliser un revêtement, notamment un revêtement d'étanchéité, présentant de bonnes résistances mécaniques, résistant aux UV, au vieillissement par oxydation, à l'eau et aux agressions chimiques et ne présentant pas de défauts de surface ni de défaut d'adhérence (bulles, gonflement ou exsudation). De tels revêtements peuvent être circulables et sont particulièrement adaptés à une utilisation en milieu extérieur non-protégé comme revêtements d'étanchéité. Les revêtements obtenus présentent une reprise en eau tout à fait satisfaisante, c'est-à-dire inférieure à 8% après 28 jours d'immersion dans de l'eau à 20°C. Les revêtements obtenus par l'utilisation de la composition selon l'invention peuvent recouvrir des surfaces horizontales, obliques, verticales, rugueuses et/ou comportant des points singuliers.

Les compositions de résine polyuréthane non-bitumineuses sont préférentiellement utilisées pour étanchéifier des surfaces horizontales circulables en extérieur, telles que des balcons, des gradins de stade, des parkings, des cours d'immeuble, etc...

Les compositions de résine polyuréthane bitumineuses sont préférentiellement utilisées pour réaliser des relevés, c'est-à dire pour réaliser un revêtement étanche entre une surface bitumineuse et un mur vertical ou un point singulier ou encore pour rénover des toitures.

L'invention va être décrite plus en détails à l'aide des exemples suivants qui sont donnés à titre purement illustratif.

### EXEMPLES:

Dans les exemples, les parts sont exprimées en poids. Les viscosités sont mesurées à l'aide d'un viscosimètre Brookfield, mobile 5 ou 6, vitesse 20 tr/min à 23°C, moins d'une semaine après la fabrication du produit ou de la composition.

Dans les exemples, les produits commerciaux suivants sont utilisés:
Novares® LA 300 : résine de d'alpha-méthylstyrène terminée par un phénol (CAS 68512-30-1) commercialisée par la société RÜTGERS.
Suprasec® 2385 : MDI bifonctionnel commercialisé par la société HUNTSMAN.
Suprasec® 5025 : polymère de MDI ayant 2,7 fonctions isocyanates commercialisé par la société HUNTSMAN.
Incozol® LV : bis-oxazolidine commercialisée par la société INCOREZ.
Terathane® 2000 : polytétrahydrofurane ayant un poids moléculaire de 2000 g/mol commercialisé par la société DUPONT.
Ruetasolv® Di : huile aromatique plastifiante de diisopropylnaphthalène commercialisée par la société RÜTGERS.
Krasol® LBH-p 3000 : diol polybutadiène ayant un poids moléculaire de 3000 g/mol commercialisé par la société Cray Valley.
Dynasylan® . organo-silane de type époxy-silane promoteur d'adhérence commercialisé par la société EVONIK.
PTSI : para-toluènesulfonyle isocyanate.
Desmodur® N3300 : trimère de HDI ayant 3 fonctions isocyanates commercialisé par la société BAYER.
PolyTHF® 2000 : polytétrahydrofurane ayant 2 fonctions NCO et un poids moléculaire de 2 000 g/mol commercialisé par la société BASF.
Polybutadiène 3000 : diol polybutadiène de masse molaire 3 000 g/mol.
Voranol® 2000 : polypropylène glycol ayant un poids moléculaire de 2000 g/mol (CAS 025322-69-4) commercialisé par la société DOW CHEMICAL.
Voranol® CP 450 : triol de glycérine polypropylène glycol (CAS 025791-96-2) ayant un poids moléculaire de 450 g/mol commercialisé par la société DOW CHEMICAL.
Voranate® T80 : TDI commercialisé par la société DOW CHEMICAL.
Terathane® 2000 : polytétrahydrofurane ayant un poids moléculaire de 2000 g/mol (CAS 24979-97-3) commercialisé par la société DUPONT.
PCP 1000 : polycaprolactone ayant 2 fonctions OH et un poids moléculaire de 1 000 g/mol commercialisé par la société SOLVAY.
Jeffcat® DMDLS : amine tertiaire commercialisée par la société HUNTSMAN.
Hyperlast® 170/80 = prépolymère PTHF/TDI commercialisé par DOW CHEMICAL.
PTSI : para-toluènesulfonyle isocyanate.

### EXEMPLE 1 : préparation d'un plastifiant polymérisable

Dans un réacteur on mélange les constituants suivants :
100 parts de Novares® LA 300,
25 parts de Suprasec® 5025.

On chauffe le mélange pendant 2 heures.

On obtient un plastifiant polymérisable ayant une viscosité Brookfield mobile 4, vitesse 30 tr/min à 23°C de 1300 centipoises et un poids moléculaire de 1 600 g/mol.

### EXEMPLE 2 : préparation d'un plastifiant polymérisable

On procède comme dans l'exemple 1, en modifiant les quantités de la façon suivante:
100 parts de Novares® LA 300
38 parts de Suprasec® 5025.

On obtient un plastifiant polymérisable ayant une viscosité d'environ 1 500 centipoises et un poids moléculaire de 2 200 g/mol.

### EXEMPLE 3 : préparation d'un plastifiant polymérisable

On procède comme dans l'exemple 1, en modifiant les quantités de la façon suivante:
100 parts de Novares® LA 300
40 parts de Desmodur® N 3300.

On obtient un plastifiant polymérisable ayant une viscosité d'environ 2 500 centipoises et un poids moléculaire de 1 400 g/mol.

### EXEMPLE 4 : préparation d'un MDI masqué par l'hexanol

Dans un réacteur on mélange les constituants suivants :
37 parts de Suprasec® 5025,
10,2 parts d'hexanol.

L'hexanol est progressivement ajouté au MDI afin de maintenir la température du mélange réactionnel inférieure à 60°C.

On obtient un MDI masqué par l'hexanol ayant une viscosité Brookfield mobile 4, vitesse 20 tr/min à 23°C de 5 000 centipoises.

### EXEMPLE 5 : préparation d'un polyisocyanate masqué

Sur 37 parties de Suprasec® 5025 dans 32,3 parties de Ruetasolv® Di, on introduit progressivement 12 parties de 2-éthylhexanol, de façon à ce que la température soit inférieure à 50°C.

Lorsque l'ajout de 2-éthylhexanol est terminé, on laisse le mélange revenir à la température ambiante.

On obtient alors une viscosité de 1 000 centipoises telle que mesurée au viscosimètre Brookfield à 23°C, avec un module R5 à une vitesse de 20tr/min.

### EXEMPLE 6 : préparation d'un polyisocyanate masqué

Sur 37 parties de Suprasec® 5025 dans 30 parties de d'acétate de butyle, on introduit progressivement 130 parties de 2-éthylhexanol, de façon à ce que la température soit inférieure à 50°C.

Lorsque l'ajout de 2-éthylhexanol est terminé, on laisse le mélange revenir à la température ambiante.

On obtient alors une viscosité de 750 centipoises telle que mesurée au viscosimètre Brookfield à 23°C, avec un module R5 à une vitesse de 20tr/min.

### EXEMPLE 7 : préparation d'un prépolymère masqué

On prépare un prépolymère par réaction de 100 parties de PolyTHF® 2000, 75 parties de polyisocyanate masqué préparé à l'exemple 4. On agite le mélange à 70°C pendant 1h15.

La teneur en monomères libres de diisocyanate est inférieure à 5%.

### EXEMPLE 8 : préparation d'un prépolymère masqué

On prépare un prépolymère par réaction de 3000 parties de polybutadiène 3000, 135 parts de butane-1,4-diol, 540 parts de Suprasec® 2385, 800 parties de polyisocyanate masqué préparé à l'exemple 6. On agite le mélange à 70°C pendant 1h15.

La teneur en monomères libres de diisocyanate est inférieure à 5%.

### EXEMPLE 9 : préparation d'un produit diluant selon l'invention

Dans un mélangeur, on mélange à la température ambiante 100 parties en poids de Suprasec® 2385, 75 parties en poids de Incozol® LV et 50 parties en poids de MHTPA.

Le produit diluant obtenu présente une viscosité de l'ordre de 150cPS et permet d'améliorer la fluidité de compositions de résines polyuréthane monocomposantes le contenant, tout en permettant une bonne vitesse de durcissement.

### EXEMPLE 10: préparation d'une composition de résine polyuréthane liquide (comparatif de l'exemple 11)

Dans un réacteur on mélange les ingrédients suivants afin de former le prépolymère :
200 parts Voranol® 2000,
24 parts de Voranol® CP 450,
60 parts de Voranate® T80.

On agite le mélange à 80°C pendant 2 heures puis on après refroidissement vers 40°C on ajoute les constituants suivants :
24 parts de xylène,
150 parts Ruetasolv® Di,
200 parts de carbonate de calcium en tant que charges pulvérulentes.

La composition obtenue présente une viscosité Brookfield mobile 5, vitesse 10 à 23°C de 1 800 centipoises et est appliquée en tant que revêtement en intérieur sous un carrelage. Cette composition dégage une forte odeur de solvant et le revêtement obtenu présente une importante absorption d'eau d'environ 17% et un manque d'adhérence due à l'utilisation d'huile plastifiante.

### EXEMPLE 11 : composition de résine polyuréthane liquide

Dans un réacteur on mélange les ingrédients suivants afin de former le prépolymère :
200 parts de Voranol® 2000,
24 parts de Voranol® CP 450,
60 parts de Voranate® T80.

On agite le mélange à 80°C pendant 2 heures puis on ajoute les constituants suivants :
200 parts de plastifiant polymérisable préparé selon l'exemple 2,
200 parts de charges pulvérulentes.

On obtient une composition monocomposante liquide sans solvant qui présente une viscosité Brookfield mobile 5, vitesse 10 à 23°C de 4 500 centipoises. La composition est appliquée en tant que revêtement en intérieur sous un carrelage. Le revêtement obtenu présente une absorption d'eau réduite aux environs de 7% et adhère parfaitement au support béton.

La composition est stockée pendant 4 mois à 20°C. Après 4 mois, la composition devient rapidement homogène lorsqu'on la mélange avec un bâton, aucun déphasage n'est observé.

### EXEMPLE 12 : préparation d'une composition de résine polyuréthane liquide comprenant le plastifiant polymérisable.

Dans un réacteur on mélange les ingrédients suivants afin de former le prépolymère :
24 parts de Terathane® 2000,
6 parts de Suprasec® 2385,
6 parts de MDI masqué par l'hexanol préparé à l'exemple 4,
9 parts de Ruetasolv® Di,
0,084 parts de chlorure de benzoyle.

Le mélange réactionnel est agité à 400 tr/min pendant 3h à 50°C.

Dans une cuve à dispersion, on mélange les ingrédients suivants afin de former la composition de résine polyuréthane :
48,3 parts de prépolymère synthétisé ci-dessus,
38,7 parts de plastifiant polymérisable synthétisé selon l'exemple 1,
4,3 parts de pigment gris RAL 7040,
5,9 parts d'Incozol® LV,
2,4 parts d'anhydride méthyltétrahydrophtalique,
0,4 parts de chlorure de benzoyle.

On agite le mélange à température ambiante à une vitesse de 600 tr/min pendant 6 minutes.

On obtient une composition monocomposante liquide sans solvant ayant une viscosité Brookfield mobile 6, vitesse 20 à 23°C de 14 000 centipoises. La composition est appliquée directement sur du béton en tant que revêtement en intérieur sous un carrelage. Le revêtement obtenu présente une absorption d'eau réduite aux environs de 7% et adhère parfaitement au support béton.

La composition est stockée pendant 4 mois à 20°C. Après 4 mois, la composition devient rapidement homogène lorsqu'on la mélange avec un bâton, aucun déphasage n'est observé.

### EXEMPLE 13 : composition de résine polyuréthane liquide

Dans un réacteur on mélange les ingrédients suivants afin de former le prépolymère :
540 parts de Voranate® T80,
90 parts de butane-1,4-diol,
1000 parts de PCP 1000,
45 parts de Voranol® CP 450,
120 parts d'acétate de butyle.

On agite le mélange à 80°C pendant 1h30.

Dans une cuve à dispersion, on mélange les ingrédients suivants afin de former la composition de résine polyuréthane :
100 parts de prépolymère synthétisé ci-dessus,
50 parts de plastifiant polymérisable synthétisé selon l'exemple 3,
10 parts de pigment gris RAL 7040,
14 parts d'Incozol® LV,
1 part d'anhydride méthyltétrahydrophtalique,

On agite le mélange à température ambiante à une vitesse de 600 tr/min pendant 6 minutes.

On obtient une composition monocomposante liquide à teneur réduite en solvant (4% de solvant) ayant une viscosité Brookfield mobile 6, vitesse 20 à 23°C de 6 000 centipoises. La composition est appliquée directement sur du béton en extérieur, par exemple sur un balcon. Le revêtement obtenu présente une absorption d'eau réduite aux environs de 7% et adhère parfaitement sur certains supports béton.

### EXEMPLE 14 : composition de primaire (comparatif de l'exemple 15)

On prépare un prépolymère par réaction de 100 parties de Voranol® 2000 et 54 parties de Suprasec® 2385. On agite le mélange à 80°C pendant 2 heures.

Puis on prépare la formulation de primaire suivante :
154 parties du prépolymère précédent,
20 parties de Suprasec® 2385,
40 parties Xylène.

La composition peut être appliquée comme primaire.

La composition préparée présente une viscosité Brookfield module 5 à 23°C de 400 centipoises.

La composition est stockée pendant 4 mois à 20°C. Après 4 mois, la composition devient rapidement homogène lorsqu'on la mélange avec un bâton, aucun déphasage n'est observé.

La teneur en monomères libres de diisocyanate est supérieure à 5%. Un tel produit est étiqueté « R40 : effet cancérigène suspecté - preuves insuffisantes » en Europe et "dangereux" en Asie.

### EXEMPLE 15 : composition de primaire

On prépare un prépolymère par réaction de 100 parties de Voranol® 2000 et 91 parties de polyisocyanate masqué préparé à l'exemple 4. On agite le mélange à 80°C pendant 2 heures.

On prépare une solution de primaire en mélangeant :
- 154 parties du prépolymère précédent,
- 35 parties du polyisocyanate masqué préparé à l'exemple 4,
- 70 parties de xylène.

Cette composition monocomposante est stable et peut être appliquée au rouleau pour faire un primaire en extérieur.

La teneur en monomères libres de diisocyanate est inférieure à 1%. Une telle composition pourra être commercialisée sans étiquetage « R40 : effet cancérigène suspecté - preuves insuffisantes ».

### EXEMPLE 16 : composition bitumineuse

Dans un réacteur on prépare le cut-back 160/220 + PTSI. On chauffe tout d'abord 80 parts de bitume de grade 160/220 fondu à 110°C auquel on incorpore 20 parts de toluène. On agite à 1 200 tr/min pendant 4 minutes et on laisse le mélange revenir à température ambiante. On ajoute alors 1 part de PTSI et on agite à 1 200 tr/min pendant 4 minutes.

Dans un réacteur on mélange les ingrédients suivants afin de former la composition de résine polyuréthane
100 parts de prépolymère masqué synthétisé à l'exemple 7,
100 parts de cut-back 160/220 + PTSI synthétisé ci-dessus, et l'on agite ce mélange pendant 3 minutes.
15 parts de xylène,
0,2 parts de Jeffcat® DMDLS.

On agite pendant 3 minutes. On obtient une composition liquide pouvant être utilisée pour faire un revêtement d'étanchéité sur toiture. La composition a une teneur en monomères libres de diisocyanate inférieure à 1%. Une telle composition pourra être commercialisée sans étiquetage « R40 : effet cancérigène suspecté - preuves insuffisantes ».

### EXEMPLE 17 : composition bitumineuse

Dans un réacteur on prépare le cut-back 160/220 + PTSI. On chauffe tout d'abord 80 parts de bitume de grade 160/220 fondu à 110°C auquel on incorpore 20 parts de toluène. On agite à 1 200 tr/min pendant 4 minutes et on laisse le mélange revenir à température ambiante. On ajoute alors 1 part de PTSI et on agite à 1 200 tr/min pendant 4 minutes.

Dans un réacteur on mélange les ingrédients suivants afin de former la composition de résine polyuréthane
500 parts de prépolymère masqué synthétisé à l'exemple 8,
500 parts de cut-back 160/220 + PTSI synthétisé ci-dessus, et l'on agite ce mélange pendant 3 minutes.
1 part de Jeffcat® DMDLS.

On agite pendant 3 minutes. On obtient une composition liquide pouvant être utilisée pour faire un revêtement d'étanchéité sur toiture. La composition a une teneur en monomères libres de diisocyanate inférieure à 1%. Une telle composition pourra être commercialisée sans étiquetage « R40 : effet cancérigène suspecté - preuves insuffisantes ».

### EXEMPLE 18 : composition de résine polyuréthane (comparatif de l'exemple 19)

Dans un réacteur on introduit 100 parties de PolyTHF® 2000, 31 parties de Suprasec® 2385 et 100 parties de Plastisol. On fait chauffer à 110°C pendant 4 heures sous agitation.

On dilue en poids la composition obtenue à l'aide de 20% d'un mélange solvant comprenant 2/3 d'acétate de méthoxypropyle - 1/3 de méthyléthyl cétone.

Cette composition de résine polyuréthane monocomposante peut être utilisée pour un revêtement de toiture. Elle présente un extrait sec d'environ 80% et n'est donc pas conforme à toutes les législations nationales relatives à la teneur en solvant.

Cette composition est thixotrope et présente une viscosité d'environ 20 OOOcPs.

### EXEMPLE 19 : composition de résine polyuréthane selon l'invention

On procède comme dans l'exemple 18, en remplaçant 15% en poids du mélange solvant (c'est-à-dire ¾ du solvant) par 15% en poids du diluant obtenu à l'exemple 9.

Cette composition prête à l'emploi, stable, peut être utilisée pour un revêtement de toiture. Elle présente un extrait sec d'environ 95% et est donc conforme à toutes les législations nationales relatives à la teneur en solvant.

Cette composition est thixotrope et présente une viscosité d'environ 20 OOOcPs.

### EXEMPLE 20 : composition de résine polyuréthane (comparatif de l'exemple 21)

Dans un mélangeur-disperseur, on introduit 100 parties d'Hyperlast® 170/80, 30 parties de xylène, 0,02 parties de dilaurate de dibutylétain et 5 parties de pigment.

On obtient une composition liquide permettant de réaliser des revêtements intérieurs d'étanchéité.

### EXEMPLE 21 : composition de résine polyuréthane

On procède comme dans l'exemple 20, mais en remplaçant les 30 parties de xylène par 30 parties du produit diluant obtenu à l'exemple 9.

On obtient une composition de résine polyuréthane monocomposante, liquide, stable, dépourvue de solvant, permettant de réaliser des revêtements d'étanchéité sans défaut (pas de bullage) et présentant de bonnes caractéristiques mécaniques.

Les revêtements obtenus à l'aide de cette composition présentent une reprise en eau tout à fait satisfaisante, qui est inférieure à 8% après immersion pendant 28 jours dans un bain d'eau à 20°C.

### EXEMPLE 22 : composition de résine polyuréthane (comparatif de l'exemple 23)

Dans un réacteur, on introduit 100 parties de Voranol® 2000, 7 parties de Voranol® CP 450, 35 parties de TDI, 15 parties de xylène. Le mélange réactionnel est chauffé à 80°C pendant 2 heures.

On ajoute alors 0,02 parties de dilaurate de dibutylétain, 1 partie de noir de carbone et 75 parties d'huile aromatique Ruetasolv® Di.

On obtient une composition liquide stable permettant de réaliser des revêtements intérieurs d'étanchéité.

### EXEMPLE 23 : composition de résine polyuréthane

On procède comme dans l'exemple 22, mais en remplaçant les 15 parties de xylène par 15 parties du produit diluant obtenu à l'exemple 9.

On obtient une composition de résine polyuréthane monocomposante, liquide, stable, dépourvue de solvant, permettant de réaliser des revêtements d'étanchéité sans défaut (pas de bullage) et présentant de bonnes caractéristiques mécaniques.

Les revêtements obtenus à l'aide de cette composition présentent une reprise en eau tout à fait satisfaisante commercialement, qui est inférieure à 8% après immersion pendant 28 jours dans un bain d'eau à 20°C.

### EXEMPLE 24 : Composition pour couche d'étanchéité liquide de base (comparatif de l'exemple 25)

On prépare une composition présentant la formule suivante :

| | |
|---|---|
| A. Voranol® 2000 | 200 parties |
| B. Voranol® CP 450 | 18 parties |
| C. Butane diol | 9 parties |
| D. TDI | 72 parties |
| E. Charge déshydratée et pigments pulvérulents dispersés dans un plastifiant dont le rapport est 2 charges / 1 plastifiant | 27 parties |
| F. Solvant Xylène | 19 parties |

Dans un réacteur, on prépare par cuisson à 80°C pendant 1h30 un prépolymère en introduisant les constituants A à D. Puis, à ce prépolymère, on ajoute à froid, sous agitation, les composants E et F. Ce système est à durcissement assez lent c'est-à-dire que le temps de durcissement est supérieur à 24h; il est en général non catalysé car la catalyse provoquerait une formation trop rapide de gaz carbonique et donc, un bullage et un moussage que l'on n'évite d'ailleurs jamais complètement.

La composition est à environ 94 % d'extrait sec, soit environ 6 % de solvant.

### EXEMPLE 25 : Composition monocomposante stable liquide pour couche d'étanchéité

On prépare un produit diluant selon l'invention qui comprend :
9 parties de Incozol® LV
9 parties de Suprasec® 2385
5 parties de MHTPA

On prépare un prépolymère comme dans l'exemple 24, on y ajoute le composant E et on ajoute 7 parties de xylène et 32 parties du produit diluant préparé ci-dessus.

La composition obtenue se différencie de celle de l'exemple 24 par les 3 propriétés suivantes :
- elle durcit beaucoup plus rapidement et peut ainsi faire l'objet de circulation et de recouvrement le lendemain, parfois même le jour même, de l'application, ce que la composition de l'exemple 24 ne permet pas,
- contrairement à la composition de l'exemple 24, il ne se produit pas de formation de bulle ou de mousse,
- la teneur en extrait sec de cette composition est de 98%, c'est-à-dire qu'elle contient 2 % de solvant, ce qui la rend à la fois conforme aux nouvelles règlementations relatives à la teneur en solvant, et classée aux USA comme produit sans solvant.

### EXEMPLE 26 : composition de résine polyuréthane liquide prête à l'emploi

Dans un réacteur on mélange les ingrédients suivants afin de former le prépolymère :
24 parts de Terathane® 2000,
6 parts de Suprasec® 2385,
6 parts de MDI polymérique masqué par l'hexanol synthétisé selon l'exemple 4,
9 parts de Ruetasolv® Di,
0,084 parts de chlorure de benzoyle

Le mélange réactionnel est agité à 400 tr/min pendant 3h à 50°C.

Dans un mélangeur-disperseur on mélange les ingrédients suivants afin de former la composition de résine polyuréthane
48,3 parts de prépolymère synthétisé ci-dessus
38,7 parts de plastifiant synthétisé selon l'exemple 1,
4,3 parts de concentré pigmentaire gris RAL 7040,
5,9 parts d'Incozol® LV,
2,4 parts d'anhydride méthyltétrahydrophtalique,
0,4 parts de chlorure de benzoyle.

On obtient une composition liquide sans solvant ayant une viscosité Brookfield mobile 6, vitesse 20 à 23°C de 14 000 centipoises.

La composition est stockée pendant 4 mois à 20°C. Après 4 mois, la composition devient rapidement homogène lorsqu'on la mélange avec un bâton, aucun déphasage n'est observé.

### EXEMPLE 27 : préparation d'une composition de résine polyuréthane liquide

Dans un réacteur on mélange les ingrédients suivants afin de former le prépolymère :
24 parts de Terathane® 2000,
6 parts de Suprasec® 2385,
6 parts de MDI polymérique masqué par l'hexanol selon l'exemple 4,
9 parts de Ruetasolv® Di,
0,084 parts de chlorure de benzoyle.

Le mélange réactionnel est agité à 400 tr/min pendant 3h entre 70 et 80°C.

Dans un réacteur on mélange les ingrédients suivants afin de former la composition de résine polyuréthane

11,25 parts de prépolymère synthétisé ci-dessus
9 parts de plastifiant polymérisable synthétisé selon l'exemple 1,
1 part de concentré pigmentaire gris RAL 7040,
1,372 part d'Incozol® LV,
0,562 parts d'anhydride méthyltétrahydrophtalique,
0,09 parts de chlorure de benzoyle.

On obtient une composition liquide sans solvant ayant une viscosité Brookfield mobile 6, vitesse 20 à 23°C de 12 000 centipoises.

La composition est stockée pendant 4 mois à 20°C. Après 4 mois, la composition devient rapidement homogène lorsqu'on la mélange avec un bâton, aucun déphasage n'est observé.

### EXEMPLE 28 : composition de résine polyuréthane bitumineuse liquide prête à l'emploi

Dans un réacteur on prépare le cutback 70/100 + PTSI. On chauffe tout d'abord 70 parts de bitume de grade 70/100 fondu à 110°C auquel on incorpore 30 parts de Ruetasolv® Di chauffé à 70°C. On agite à 1 200 tr/min pendant 4 minutes et on laisse le mélange revenir à température ambiante. On ajoute alors 2 parts de PTSI et on agite à 1 200 tr/min pendant 4 minutes.

Dans un réacteur on mélange les ingrédients suivants afin de former le prépolymère :
100 parts de Terathane® 2000,
50 parts de Suprasec® 2385,
15 parts de Ruetasolv® Di,

Le mélange réactionnel est agité à 400 tr/min pendant 3h à 50°C.

Dans un mélangeur-disperseur, on mélange les ingrédients suivants afin de former la composition de résine polyuréthane
100 parts de prépolymère synthétisé ci-dessus
30 parts de plastifiant synthétisé selon l'exemple 1,
100 parts de Cutback 70/100 + PTSI synthétisé ci-dessus,
5,9 parts d'Incozol® LV,
2,4 parts d'anhydride méthyltétrahydrophtalique,

On obtient une composition liquide sans solvant ayant une viscosité Brookfield mobile 6, vitesse 20 à 23°C de 20 200 centipoises.

La composition est stockée pendant 4 mois à 20°C. Après 4 mois, la composition devient rapidement homogène lorsqu'on la mélange avec un bâton, aucun déphasage n'est observé.

### EXEMPLE 29 : composition de résine polyuréthane bitumineuse liquide prête à l'emploi

Dans un réacteur on prépare le cut-back 160/220 + PTSI. On chauffe tout d'abord 70 parts de bitume de grade 160/220 fondu à 110°C auquel on incorpore 30 parts de Ruetasolv® Di chauffé à 70°C. On agite à 1 200 tr/min pendant 4 minutes et on laisse le mélange revenir à température ambiante. On ajoute alors 2 parts de PTSI et on agite à 1 200 tr/min pendant 4 minutes.

Dans un réacteur on mélange les ingrédients suivants afin de former le prépolymère :
100 parts de Krasol® LBH-p 3000,
19 parts de Suprasec® 2385,
30 parts de Ruetasolv® Di,
0,24 parts de chlorure de benzoyle.

Le mélange réactionnel est agité à 400 tr/min pendant 3h à 90°C.

Dans un réacteur on mélange les ingrédients suivants afin de former la composition de résine polyuréthane :
11,25 parts de prépolymère synthétisé ci-dessus,
5,25 parts de cut-back 160/220 + PTSI synthétisé ci-dessus, et l'on agite ce mélange pendant 3 minutes.

On ajoute alors :
30 parts de plastifiant synthétisé selon l'exemple 1,
1,52 parts d'Incozol® LV, et l'on agite ce mélange pendant 3 minutes. On ajoute alors :
   0,562 parts d'anhydride méthyltétrahydrophtalique,
   0,06 parts de chlorure de benzoyle,
   0,06 parts de dilaurate de dibutyle étain,
   0,2 parts de Dynasylan.

On obtient une composition liquide sans solvant ayant une viscosité Brookfield mobile 6, vitesse 20 à 23°C de 35 000 centipoises.

La composition est stockée pendant 4 mois à 20°C. Après 4 mois, la composition devient rapidement homogène lorsqu'on la mélange avec un bâton, aucun déphasage n'est observé.

### EXEMPLE 30: application des compositions des exemples 26 à 29

Sur une surface plane en ciment de 25 m² on applique au rouleau patte de lapin la composition des exemples 26, 27, 28 et 29.

Le revêtement obtenu est homogène, sans bulle et aucune exsudation n'est observée. La surface du revêtement est lisse et brillante.

Tests effectués: Résistance à la rupture et allongement élastique sur un appareil Instron selon la norme EN ISO 527-3.

### Composition de l'exemple 26 :

On applique la composition en une couche de 0,9 mm. Le revêtement obtenu présente les propriétés suivantes :
Résistance à la rupture 2,5 MPa,
Allongement élastique 600% (sans extensomètre).

### Composition de l'exemple 27 :

On applique la composition en une couche de 0,9 mm. Le revêtement obtenu présente les propriétés suivantes :
Résistance à la rupture 2,5 MPa,
Allongement élastique 600% (sans extensomètre).

### Composition de l'exemple 28 :

On applique la composition en une couche de 1,3 mm. Le revêtement obtenu présente les propriétés suivantes :
Résistance à la rupture 4,2 MPa,
Allongement élastique 400% (sans extensomètre).

### Composition de l'exemple 29 :

On applique la composition en une couche de 1 mm. Le revêtement obtenu présente les propriétés suivantes :
Résistance à la rupture 2 MPa,
Allongement élastique 400% (sans extensomètre).

## Revendications

1. Composition de résine polyuréthane comprenant un prépolymère et un plastifiant polymérisable constitué d'une chaîne hydrocarbonée dont une seule extrémité porte plus d'une fonction isocyanate, ladite chaîne hydrocarbonée comprenant et/ou étant substituée par un cycle aromatique et/ou un cycle aliphatique et/ou ladite chaîne hydrocarbonée étant substituée par au moins deux chaînes hydrocarbonées pouvant comporter une insaturation, et le nombre de fonctions isocyanates étant strictement supérieur à 1, de préférence supérieur à 1,2, plus préférentiellement supérieur à 1,5 et inférieur ou égal à 2,2.

2. Composition de résine polyuréthane selon la revendication 1, comprenant en outre au moins un constituant choisi dans le group comprenant :
- un polyisocyanate masqué, qui présente la formule suivante: 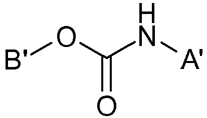 où
- B' représente alkyle,
- A' représente un groupe comportant un nombre de fonctions isocyanates compris entre 1,5 et 2,2, de préférence entre 1,5 et 2,1 et plus préférentiellement encore entre 1,5 et 2 ;
- un produit diluant comprenant:
- un polyisocyanate ou un mélange de polyisocyanates présentant un nombre de fonctions isocyanates strictement supérieur à 1 et inférieur ou égal à 3,1, de préférence supérieur à 1,5 et inférieur ou égal à 2,2,
- une bis-oxazolidine et éventuellement une mono-oxazolidine, et
- un catalyseur,
les quantités de bis-oxazolidine, et éventuellement de mono-oxazolidine, et de polyisocyanate ou du mélange de polyisocyanates présentant un nombre de fonctions isocyanates strictement supérieur à 1 et inférieur ou égal à 3,1 étant telles que le ratio molaire entre les fonctions -NH de la bis-oxazolidine, et éventuellement de la mono-oxazolidine, et les fonctions NCO est de 0,3 à 0,75; les fonctions -NH de la bis-oxazolidine, et éventuellement de la mono-oxazolidine, étant les fonctions -NH issues des fonctions amines formées après ouverture du cycle oxazolidine ;
et leurs mélanges.

3. Composition de résine polyuréthane selon la revendication 1 ou 2, **caractérisée en ce que** ladite composition comprend du bitume ou un mélange bitumineux.

4. Composition de résine polyuréthane selon l'une quelconque des revendications 1 à 3, **caractérisée en ce que** ladite composition comprend un prépolymère, le plastifiant polymérisable et le produit diluant.

5. Composition de résine polyuréthane selon l'une quelconque des revendications 1 à 4, **caractérisée en ce que** ladite composition comprend un prépolymère et/ou le prépolymère masqué, le plastifiant polymérisable, le polyisocyanate masqué et le produit diluant.

6. Composition de résine polyuréthane selon l'une quelconque des revendications 1 à 5, **caractérisée en ce que** ladite composition est liquide et ne contient pas de solvant.

7. Composition de résine polyuréthane selon l'une quelconque des revendications 1 à 6, **caractérisée en ce que** ladite composition a une viscosité comprise entre 1 000 et 40 000 centipoises, ladite viscosité étant mesurée à 25°C à l'aide d'un viscosimètre Brookfield DV-E, mobile 6, vitesse 20 tr/min.

8. Composition de résine polyuréthane selon l'une quelconque des revendications 2 à 7, **caractérisée en ce que** ladite composition contient moins de 1% en poids de monomères libres de diisocyanate, tel que mesuré par chromatographie gazeuse couplée à une spectrométrie de masse.

9. Composition de résine polyuréthane selon l'une quelconque des revendications 1 à 8, **caractérisée en ce que** le plastifiant polymérisable présente un poids moléculaire compris entre 600 et 3 000 g/mol, de préférence entre 700 et 2 500 g/mol, et plus préférentiellement encore entre 800 et 2 000 g/mol.

10. Composition de résine polyuréthane selon l'une quelconque des revendication 1 à 9, **caractérisée en ce que** le plastifiant polymérisable présente une viscosité comprise entre 400 et 14 000 centipoises, de préférence entre 1 300 et 13 000 centipoises et plus préférentiellement encore entre 2 000 et 12 000, mesurée avec un viscosimètre Brookfield (mobile 6, vitesse 20 tr/min, 25°C).

11. Composition de résine polyuréthane selon l'une quelconque des revendications 2 à 10, **caractérisée en ce que** le groupe B' du polyisocyanate masqué est un alkyle, éventuellement insaturé, en C₂-C₂₀, de préférence en C₃-C₁₂, plus préférentiellement encore en C₄-C₁₀.

12. Composition de résine polyuréthane selon l'une quelconque des revendications 2 à 11, **caractérisée en ce que** le produit diluant comprend :
- une quantité de polyisocyanate ou d'un mélange de polyisocyanates présentant un nombre de fonctions isocyanates strictement supérieur à 1 et inférieur ou égale à 3,1 telle que le nombre de fonctions NCO soit équivalent à celui de 100 parties en poids de diisocyanate de diphénylméthane MDI (N°CAS 26447-40-5) ;
- 40 à 100 parties en poids de bis-oxazolidine, et éventuellement de mono-oxazolidine,
- 30 à 50 parties en poids de catalyseur.

13. Composition selon l'une quelconque des revendications 1 à 12, dans laquelle au moins une partie du prépolymère est un prépolymère masqué qui est formé par réaction entre :
- un polyol ayant entre 1,5 et 3 fonctions OH et un poids moléculaire entre 900 et 3 000 g/mol, de préférence entre 1 000 et 2 800 g/mol et plus préférentiellement entre 1 500 et 2 500 g/mol ; et
- le polyisocyanate masqué ayant un nombre de fonctions isocyanates compris entre 1,5 et 2,2 tel que défini à la revendication 1,
dans un ratio tel que le nombre de fonctions NCO du polyisocyanate par rapport au nombre de fonctions OH du polyol soit de 1,5 à 2,5 environ.

14. Composition selon l'une quelconque des revendications 1 à 13, comprenant :
- 30 à 50% de prépolymère,
- 30 à 50% de plastifiant polymérisable,
- 5 à 15% de produit diluant comprenant une bis-oxazolidine et éventuellement une mono-oxazolidine, un catalyseur et un polyisocyanate ou un mélange de polyisocyanates présentant un nombre de fonctions isocyanates strictement supérieur à 1 et inférieur ou égal à 2,2

15. Composition selon l'une quelconque de revendications 2 à 14, comprenant:
- 15 à 50% de mélange bitumineux;
- 20 à 50% de prépolymère,
- 10 à 40% de plastifiant polymérisable;
- 4 à 10% de produit diluant comprenant une bis-oxazolidine et éventuellement une mono-oxazolidine, un catalyseur, et un polyisocyanate ou un mélange de polyisocyanates présentant un nombre de fonctions isocyanates strictement supérieur à 1 et inférieur ou égal à 2,2.

16. Utilisation de la composition selon l'une quelconque des revendication 1 à 15 pour réaliser des revêtements, notamment des revêtements d'étanchéité, éventuellement circulables, présentant de bonnes résistances mécaniques, résistant aux UV, au vieillissement par oxydation, à l'eau et aux agressions chimiques et ne présentant pas de défauts de surface ni de défaut d'adhérence (bulles, gonflement ou exsudation), adaptés à une utilisation en milieu extérieur non-protégé et qui présentent une reprise en eau inférieure à 8% après 28 jours d'immersion dans de l'eau à 20°C.

## Patentansprüche

1. Polyurethanharz-Zusammensetzung, welche ein Prepolymer und einen polymerisierbaren Weichmacher umfasst, gebildet aus einer Kohlenwasserstoffkette, an der ein einziges Ende mehr als eine Isocyanat-Funktion trägt, wobei die Kohlenwasserstoffkette einen aromatischen Ring und/oder einen aliphatischen Ring umfasst und/oder dadurch substituiert ist und/oder wobei die Kohlenwasserstoffkette durch wenigstens zwei Kohlenwasserstoffketten substituiert ist, die eine Ungesättigtheit aufweisen können, und wobei die Anzahl der Isocyanat-Funktionen streng größer 1, bevorzugt größer 1,2, noch stärker bevorzugt größer 1,5 und kleiner oder gleich 2,2 ist.

2. Polyurethanharz-Zusammensetzung nach Anspruch 1, welche ferner wenigstens einen Bestandteil aufweist, der gewählt ist aus der Gruppe, umfassend:
- ein maskiertes Polyisocyanat mit folgender Formel: 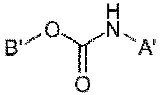 wobei gilt:
- B' steht für ein Alkyl,
- A' steht für eine Gruppe, welche eine Anzahl von Isocyanat-Funktionen zwischen 1,5 und 2,2, bevorzugt zwischen 1,5 und 2,1 und nach stärker bevorzugt zwischen 1,5 und 2 umfasst;
- ein Verdünnungsmittel, umfassend:
- ein Polyisocyanat oder eine Polyisocyanatmischung, welche eine Anzahl von Isocyanat-Funktionen streng größer als 1 und kleiner gleich 3,1, bevorzugt größer 1,5 und kleiner gleich 2,2 aufweist,
- ein bis-Oxazolidin und ggf. ein mono-Oxazolidin, und
- einen Katalysator,
wobei die Mengen des bis-Oxazolidin und ggf. mono-Oxazolidin und der Polyisocyanat-Mischung mit einer Anzahl von Isocyanat-Funktionen streng größer als 1 und kleiner gleich 3,1 so sind, dass das Molverhältnis der -NH-Funktionen des bis-Oxazolidins und ggf. des mono-Oxazolidins zu den NCO-Funktionen gleich 0,3 bis 0,75 ist; wobei die -NH-Funktionen des bis-Oxazolidins und ggf. des mono-Oxazolidins -NH-Funktionen sind, die aus Amin-Funktionen hervorgehen, die nach der Öffnung des Oxazolidin-Rings gebildet wurden;
und deren Mischungen.

3. Polyurethanharz-Zusammensetzung nach Anspruch 1 oder 2, **dadurch gekennzeichnet, dass** die Zusammensetzung Bitumen oder eine bituminöse Mischung umfasst.

4. Polyurethanharz-Zusammensetzung nach einem der Ansprüche 1 bis 3, **dadurch gekennzeichnet, dass** die Zusammensetzung ein Prepolymer, den polymerisierbaren Weichmacher und das Lösungsmittel umfasst.

5. Polyurethanharz-Zusammensetzung nach einem der Ansprüche 1 bis 4, **dadurch gekennzeichnet, dass** die Zusammensetzung ein Prepolymer und/oder das maskierte Prepolymer, den polymerisierbaren Weichmacher, das maskierte Polyisocyanat und das Lösungsmittel umfasst.

6. Polyurethanharz-Zusammensetzung nach einem der Ansprüche 1 bis 5, **dadurch gekennzeichnet, dass** die Zusammensetzung flüssig ist und kein Lösungsmittel enthält.

7. Polyurethanharz-Zusammensetzung nach einem der Ansprüche 1 bis 6, **dadurch gekennzeichnet, dass** die Zusammensetzung eine Viskosität zwischen 1 000 und 40 000 Centipoise aufweist, wobei die Viskosität bei 25 °C mittels eines Brookfield DV-E-Viskosimeters, Spindel Nr. 6, bei 20 U/min gemessen wird.

8. Polyurethanharz-Zusammensetzung nach einem der Ansprüche 2 bis 7, **dadurch gekennzeichnet, dass** die Zusammensetzung weniger als 1 Gewichtsprozent freie Diisocyanat-Monomere enthält, gemessen durch Gaschromatographie kombiniert mit Massenspektrometrie.

9. Polyurethanharz-Zusammensetzung nach einem der Ansprüche 1 bis 8, **dadurch gekennzeichnet, dass** der polymerisierbare Weichmacher ein Molekulargewicht zwischen 600 und 3 000 g/mol, bevorzugt zwischen 700 und 2 500 g/mol und noch stärker bevorzugt zwischen 800 und 2 000 g/mol aufweist.

10. Polyurethanharz-Zusammensetzung nach einem der Ansprüche 1 bis 9, **dadurch gekennzeichnet, dass** der polymerisierbare Weichmacher eine Viskosität zwischen 400 und 14 000 Centipoise, bevorzugt zwischen 1 300 und 13 000 Centipoise und nach stärker bevorzugt zwischen 2 000 und 12 000 Centipoise aufweist, gemessen mit einem Brookfield-Viskosimeter (Spindel Nr. 6, bei 20 U/min und 25°C).

11. Polyurethanharz-Zusammensetzung nach einem der Ansprüche 2 bis 10, **dadurch gekennzeichnet, dass** die B'-Gruppe des maskierten Polyisocyanats ein Alkyl ist, ggf. ungesättigt, C₂-C₂₀, bevorzugt C₃-C₁₂, noch stärker bevorzugt C₄-C₁₀.

12. Polyurethanharz-Zusammensetzung nach einem der Ansprüche 2 bis 11, **dadurch gekennzeichnet, dass** das Lösungsmittel umfasst:
- eine Menge Polyisocyanat oder einer Polyisocyanatmischung, welche eine Anzahl von Isocyanat-Funktionen streng größer als 1 und kleiner gleich 3,1 aufweist, so dass die Anzahl der NCO-Funktionen denen der 100 Gewichtsteile des MDI Diphenylmethan-Diisocyanats (CAS-Nr. 26447-40-5) entspricht;
- 40 bis 100 Gewichtsteile bis-Oxazolidin und ggf. mono-Oxazolidin,
- 30 bis 50 Gewichtsteile Katalysator.

13. Zusammensetzung nach einem der Ansprüche 1 bis 12, bei welcher wenigstens ein Teil des Prepolymers ein maskiertes Prepolymer ist, das gebildet ist durch eine Reaktion von:
- einem Polyol mit 1,5 bis 3 OH-Funktionen und einem Molekulargewicht zwischen 900 und 3 000 g/mol, bevorzugt 1 000 und 2 800 g/mol und noch stärker bevorzugt zwischen 1 500 und 2 500 g/mol; und
- dem maskierten Polyisocyanat mit einer Anzahl Isocyanat-Funktionen zwischen 1,5 und 2,2, wie in Anspruch 1 beschrieben,
in einem Verhältnis, sodass die Anzahl der NCO-Funktionen des Polyisocyanats im Verhältnis zur Anzahl der OH-Funktionen des Polyols ungefähr 1,5 bis 2,5 beträgt.

14. Zusammensetzung nach einem der Ansprüche 1 bis 13, umfassend:
- 30 bis 50% Prepolymer,
- 30 bis 50% polymerisierbaren Weichmacher,
- 5 bis 15% Verdünnungsmittel, umfassend ein bis-Oxazolidin und ggf. ein mono-Oxazolidin, einen Katalysator und ein Polyisocyanat oder eine Mischung von Polyisocyanaten, die eine Anzahl von Isocyanat-Funktionen streng größer als 1 und kleiner gleich 2,2 aufweisen.

15. Zusammensetzung nach einem der Ansprüche 2 bis 14, umfassend:
- 15 bis 50% bituminöse Mischung;
- 20 bis 50% Prepolymer,
- 10 bis 40% polymerisierbaren Weichmacher;
- 4 bis 10% Lösungsmittel, umfassend ein bis-Oxazolidin und ggf. ein mono-Oxazolidin, einen Katalysator und ein Polyisocyanat oder eine Mischung von Polyisocyanaten, die eine Anzahl von Isocyanat-Funktionen streng größer als 1 und kleiner gleich 2,2 aufweisen.

16. Verwendung der Zusammensetzung nach einem der Ansprüche 1 bis 15 zur Herstellung von Beschichtungen, insbesondere von Dichtungsbeschichtungen, ggf. begehbar, welche eine gute mechanische Widerstandsfähigkeit aufweisen, resistent gegen UV-Strahlung, Alterung durch Oxidation, Wasser und chemische Aggressoren sowie keine Oberflächenmängel oder Adhäsionsmängel (Blasen, Aufquellen, Ausschwitzen) aufweisen, für eine Verwendung im ungeschützten Außenbereich geeignet sind und eine Wasseraufnahme kleiner 8% nach 28-tägiger Immersion in Wasser bei 20 °C aufweisen.

## Claims

1. A polyurethane resin composition comprising a prepolymer and a polymerizable plasticizer consisting of a hydrocarbon chain, only one end of which bears more than one isocyanate function, said hydrocarbon chain comprising and/or being substituted with an aromatic ring and/or an aliphatic ring and/or said hydrocarbon chain being substituted with at least two hydrocarbon chains that may comprise an unsaturation, and the number of isocyanate functions being strictly greater than 1, preferably greater than 1.2, more preferentially greater than 1.5 and less than or equal to 2.2.

2. The polyurethane resin composition according to claim 1, further comprising at least one constituent chosen from the group comprising:
- a masked polyisocyanate, which has the following formula: 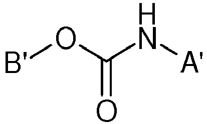 wherein
- B' represents alkyl,
- A' represents a group comprising a number of isocyanate functions between 1.5 and 2.2, preferably between 1.5 and 2.1 and even more preferentially between 1.5 and 2;
- a diluent comprising:
- a polyisocyanate or a mixture of polyisocyanates having a number of isocyanate functions strictly greater than 1 and less than or equal to 3.1, preferably greater than 1.5 and less than or equal to 2.2,
- a bis-oxazolidine and optionally a mono-oxazolidine, and
- a catalyst,
the amounts of bis-oxazolidine, and optionally of mono-oxazolidine, and of polyisocyanate or of the mixture of polyisocyanate containing a number of isocyanate functions strictly greater than 1 and less than or equal to 3.1 being such that the molar ratio between the -NH functions of the bis-oxazolidine, and optionally of the mono-oxazolidine, and the NCO functions is from 0.3 to 0.75; the -NH functions of the bis-oxazolidine, and optionally of the mono-oxazolidine, being the -NH functions derived from the amine functions formed after opening of the oxazolidine ring;
and mixtures thereof.

3. The polyurethane resin composition according to claim 1 or 2, **characterized in that** said composition comprises bitumen or a bituminous mixture.

4. The polyurethane resin composition according to any one of claims 1 to 3, **characterized in that** said composition comprises a prepolymer, the polymerizable plasticizer and the diluent.

5. The polyurethane resin composition according to any one of claims 1 to 4, **characterized in that** said composition comprises a prepolymer and/or the masked prepolymer, the polymerizable plasticizer, the masked polyisocyanate and the diluent.

6. The polyurethane resin composition according to any one of claims 1 to 5, **characterized in that** said composition is liquid and does not contain any solvent.

7. The polyurethane resin composition according to any one of claims 1 to 6, **characterized in that** said composition has a viscosity between 1,000 and 40,000 centipoises, said viscosity being measured at 25°C using a Brookfield DV-E viscometer, spindle 6, speed 20 rpm.

8. The polyurethane resin composition according to any one of claims 2 to 7, **characterized in that** said composition contains less than 1% by weight of free diisocyanate monomers, as measured by gas chromatography coupled with mass spectrometry.

9. The polyurethane resin composition according to any one of claims 1 to 8, **characterized in that** the polymerizable plasticizer has a molecular weight between 600 and 3,000 g/mol, preferably between 700 and 2,500 g/mol and even more preferentially between 800 and 2,000 g/mol.

10. The polyurethane resin composition according to any one of claims 1 to 9, **characterized in that** the polymerizable plasticizer has a viscosity between 400 and 14,000 centipoises, preferably between 1,300 and 13,000 centipoises and even more preferentially between 2,000 and 12,000 centipoises, measured with a Brookfield viscometer (spindle 6, speed 20 rpm, 25°C).

11. The polyurethane resin composition according to any one of claims 2 to 10, **characterized in that** the group B' of the masked polyisocyanate is an optionally unsaturated C₂-C₂₀, preferably C₃-C₁₂ and even more preferentially C₄-C₁₀ alkyl.

12. The polyurethane resin composition according to any one of claims 2 to 11, **characterized in that** the diluent comprises:
- an amount of polyisocyanate or of a mixture of polyisocyanates containing a number of isocyanate functions strictly greater than 1 and less than or equal to 3.1, such that the number of NCO functions is equivalent to that of 100 parts by weight of diphenylmethane diisocyanate MDI (CAS No. 26447-40-5) ;
- 40 to 100 parts by weight of bis-oxazolidine and optionally of mono-oxazolidine; and
- 30 to 50 parts by weight of catalyst.

13. The composition according to any one of claims 1 to 12, wherein at least part of the prepolymer is a masked prepolymer which is formed by reaction between:
- a polyol containing between 1.5 and 3 OH functions and having a molecular weight between 900 and 3,000 g/mol, preferably between 1,000 and 2,800 g/mol and more preferentially between 1,500 and 2,500 g/mol; and
- the masked polyisocyanate having a number of isocyanate functions between 1.5 and 2.2 as defined in claim 1,
in a ratio such that the number of NCO functions of the polyisocyanate relative to the number of OH functions of the polyol is from 1.5 to 2.5 approximately.

14. The composition according to any one of claims 1 to 13, comprising:
- 30% to 50% of prepolymer,
- 30% to 50% of polymerizable plasticizer,
- 5% to 15% of diluent comprising a bis-oxazolidine and optionally a mono-oxazolidine, a catalyst and a polyisocyanate or a mixture of polyisocyanates having a number of isocyanate functions strictly greater than 1 and less than or equal to 2.2.

15. The composition according to any one of claims 2 to 14, comprising:
- 15% to 50% of bituminous mixture;
- 20% to 50% of prepolymer;
- 10% to 40% of polymerizable plasticizer;
- 4% to 10% of diluent comprising a bis-oxazolidine and optionally a mono-oxazolidine, a catalyst and a polyisocyanate or a mixture of polyisocyanates having a number of isocyanate functions strictly greater than 1 and less than or equal to 2.2.

16. The use of the composition according to any one of claims 1 to 15 for making coatings, especially waterproof coatings, which are optionally traffic-bearing, which have good mechanical strength, which are resistant to UV, to oxidation aging, to water and to chemical attack, which have no surface defects or adhesion defects (bubbles, swelling or exudation), which are suitable for use in an unprotected exterior medium and which have a water uptake of less than 8% after 28 days of immersion in water at 20°C.
